(19) Europäisches Patentamt
European Patent Office
Office européen des brevets

(11) EP 4 317 262 A1

(12) **EUROPEAN PATENT APPLICATION**
published in accordance with Art. 153(4) EPC

(43) Date of publication:
**07.02.2024 Bulletin 2024/06**

(21) Application number: **22779806.3**

(22) Date of filing: **04.03.2022**

(51) International Patent Classification (IPC):
***C08J 3/12*** *(2006.01)* ***B01J 20/26*** *(2006.01)*
***B01J 20/30*** *(2006.01)*

(52) Cooperative Patent Classification (CPC):
**B01J 20/26; B01J 20/30; C08J 3/12**

(86) International application number:
**PCT/JP2022/009365**

(87) International publication number:
**WO 2022/209581 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061218**

(71) Applicant: **Sumitomo Seika Chemicals Co., Ltd.**
**Kako-gun, Hyogo 675-0145 (JP)**

(72) Inventors:
- **SATO, Ryota**
  **Himeji-shi, Hyogo 672-8076 (JP)**
- **KAWATSU, Hironobu**
  **Himeji-shi, Hyogo 672-8076 (JP)**

(74) Representative: **Mewburn Ellis LLP**
**Aurora Building**
**Counterslip**
**Bristol BS1 6BX (GB)**

# (54) DEVICE AND METHOD FOR PRODUCING WATER-ABSORBENT RESIN PARTICLES

(57) This water-absorbent resin particle production device is provided with a dryer, a classifier, and a sorter. The dryer is for drying a water-absorbent resin composition to obtain water-absorbent resin precursors. The classifier is for classifying the water-absorbent resin precursors to obtain water-absorbent resin particles. The sorter is disposed on a pathway connecting the dryer and the classifier. The sorter is configured to select water-absorbent resin precursors having a water content of 20% or more.

Fig. 1

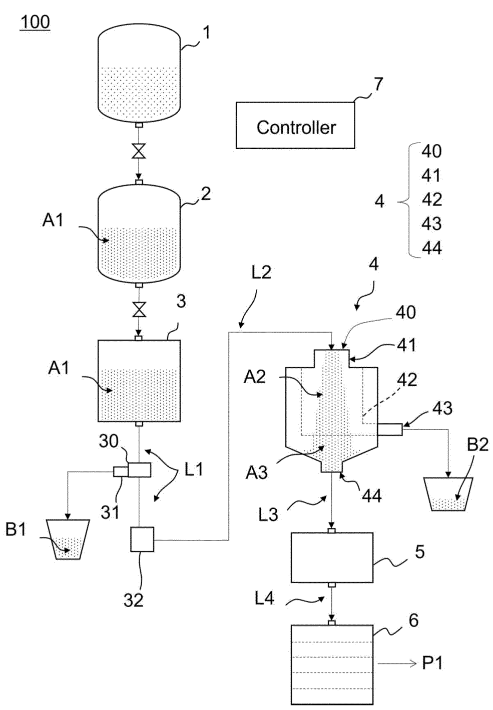




Processed by Luminess, 75001 PARIS (FR)

## Description

TECHNICAL FIELD

The present invention relates to a device and a method for producing water-absorbent resin particles.

BACKGROUND ART

Production steps of water-absorbent resin particles include a step of polymerizing monomers as a raw material to obtain a water-absorbent resin composition and a step of drying the water-absorbent resin composition thereafter to obtain a water-absorbent resin precursor. The water-absorbent resin precursor that has undergone these steps is classified by a classifier, whereby water-absorbent resin particles having a target particle size distribution can be produced.

Patent Document 1 discloses a water-absorbent resin production device including a dryer drying a water-absorbent resin composition to provide a powder, a powder flow path member functioning as a flow path of the powder, a powder flow rate regulating discharge member discharging the powder at a predetermined flow rate, and a collector. According to Patent Document 1, powder aggregates having a greater size than a predetermined size in the powder passing through the inside of the flow path is collected by the collector, whereby the powder aggregates are prevented from increasing the drive load of a driving portion of the powder flow rate regulating discharge member, and the water-absorbent resin can be produced with high production efficiency.

PRIOR ART DOCUMENT

PATENT DOCUMENT

Patent Document 1: Japanese Patent No. 6738979

SUMMARY OF THE INVENTION

PROBLEMS TO BE SOLVED BY THE INVENTION

According to Patent Document 1, large powder aggregates may have poor characteristics as a water-absorbent resin. Therefore, by collecting and removing large powder aggregates with the collector, it is possible to improve the production efficiency and to produce a high-quality water-absorbent resin. However, even with the production device disclosed in Patent Document 1, variations in quality of water-absorbent resin particles are still exhibited.

Common examples of an index indicating the quality of water-absorbent resin particles include various performances such as water absorption performance (such as the water absorption rate and the water absorption capacity under application of pressure (water absorption capacity under pressure)), impact resistance, and flowability. As a result of examination by the present inventors, it has been found that particularly variations in water absorption capacity under pressure and water absorption rate are easily caused. For this reason, there has been a demand for a device capable of producing water-absorbent resin particles in which variations in quality such as the water absorption capacity under pressure and the water absorption rate are further suppressed.

An object of the present invention is to provide a device and a method for producing water-absorbent resin particles capable of producing water-absorbent resin particles in which variations in water absorption capacity under pressure and water absorption rate are suppressed.

MEANS FOR SOLVING THE PROBLEM

A water-absorbent resin particle production device according to a first aspect includes a dryer, a classifier, and a sorter. The dryer dries a water-absorbent resin composition to provide a water-absorbent resin precursor. The classifier classifies the water-absorbent resin precursor to provide water-absorbent resin particles. The sorter is disposed on a pathway connecting the dryer and the classifier. The sorter is configured to select a portion of the water-absorbent resin precursor having a water content of 20% or more.

According to the study by the inventors, some portion of the water-absorbent resin precursor after being dried with a dryer still contains a relatively large amount of water, and when such a water-absorbent resin precursor is fed into a classifier, the quality of the resulting water-absorbent resin particles, particularly the water absorption capacity under pressure and the water absorption rate, is likely to vary. With the water-absorbent resin particle production device according to the above aspect, a portion of the water-absorbent resin precursor having a water content of 20% or more is selected in the pathway connecting the dryer and the classifier. As a result, the selected portion of the water-absorbent resin precursor having a water content of 20% or more can be removed from the pathway connected to the classifier, and variations in water absorption capacity under pressure and water absorption rate of the water-absorbent resin particles can be reduced.

A water-absorbent resin particle production device according to a second aspect is the water-absorbent resin particle production device according to the first aspect, in which the sorter is configured to select a portion of the water-absorbent resin precursor having a surface temperature of 50°C to 100°C and a size greater than a predetermined size as the portion of the water-absorbent resin precursor having a water content of 20% or more.

A water-absorbent resin particle production device according to a third aspect is the water-absorbent resin particle production device according to the second aspect, in which the sorter includes an input port portion provided with an input port configured to receive the water-absorbent resin precursor discharged from the dryer, and a sorting member connected to the input port portion and provided with an opening of the predetermined size. The sorter is configured to feed a portion of the water-absorbent resin precursor introduced into the input port to a pathway connected to the classifier, the portion having passed through the opening.

A water-absorbent resin particle production device according to a fourth aspect is the water-absorbent resin particle production device according to the third aspect, in which the sorting member includes a net-like member having a plurality of openings of the predetermined size.

A water-absorbent resin particle production device according to a fifth aspect is the water-absorbent resin particle production device according to the third or fourth aspect, in which the sorting member is configured to impart movement to the water-absorbent resin precursor introduced into the input port.

A water-absorbent resin particle production device according to a sixth aspect is the water-absorbent resin particle production device according to any one of the second to fifth aspects, in which the predetermined size is 7 mm to 15 mm.

A water-absorbent resin particle production device according to a seventh aspect is the water-absorbent resin particle production device according to any one of the first to sixth aspects, further including a cooler disposed on a pathway connecting the sorter and the classifier. The cooler is configured to cool the water-absorbent resin precursor sent from the sorter to the pathway connected to the classifier.

A method for producing water-absorbent resin particles according to an eighth aspect includes the following steps.

- A step of drying a water-absorbent resin composition to provide a water-absorbent resin precursor.
- A step of selecting and removing a portion of the water-absorbent resin precursor, the portion having a water content of 20% or more, from the water-absorbent resin precursor.
- A step of classifying the remaining portion of the water-absorbent resin precursor to provide classified water-absorbent resin particles.

## ADVANTAGES OF THE INVENTION

Some portion of a water-absorbent resin precursor after being dried with a dryer still contains a relatively large amount of water, and such a water-absorbent resin precursor is a cause of variations in the water absorption capacity under pressure and the water absorption rate of the water-absorbent resin particles classified by a classifier. According to the above aspect, a portion of the water-absorbent resin precursor having a water content of 20% or more is selected from the water-absorbent resin precursor on the pathway connecting the dryer and the classifier. This operation enables the selected portion of the water-absorbent resin precursor to be removed from the pathway connected to the classifier, and variations in water absorption capacity under pressure and water absorption rate of the water-absorbent resin particles obtained by the classifier can be reduced.

## BRIEF DESCRIPTION OF THE DRAWINGS

Fig. 1 is an overall configuration diagram of a water-absorbent resin particle production device according to an embodiment.
Fig. 2A shows an example of a net-like member.
Fig. 2B shows an example of the net-like member.
Fig. 2C shows an example of the net-like member.
Fig. 2D shows an example of the net-like member.
Fig. 3A shows an example of a plate-like member.
Fig. 3B shows an example of the plate-like member.

Fig. 4 is a diagram illustrating a method for calculating an aperture ratio.
Fig. 5A shows a configuration example of a sorter.
Fig. 5B shows a configuration example of the sorter.
Fig. 5C shows a configuration example of the sorter.
Fig. 5D shows a configuration example of the sorter.
Fig. 6 is a diagram illustrating a method for specifying the size of a water-absorbent resin precursor.
Fig. 7 is a flowchart of a flow of a method for producing water-absorbent resin particles according to an embodiment.
Fig. 8 shows a configuration of an experimental apparatus.
Fig. 9A is a graph of a water absorption amount under pressure obtained by an experiment.
Fig. 9B is a graph of an evaluation index of a water absorption rate obtained by an experiment.

EMBODIMENT OF THE INVENTION

Hereinafter, a water-absorbent resin particle production device and a method for producing water-absorbent resin particles according to an embodiment of the present invention will be described with reference to the drawings.
In the present specification, to "select" includes not only to "extract only a specific small group a from a certain large group X" but also to "extract a specific small group a from a certain large group X while containing another small group b (such that its ratio is higher than the ratio (mass basis) of the small group a included in the large group X)".

<1. Water-Absorbent Resin Particle Production Device>

Fig. 1 is an overall configuration diagram of a water-absorbent resin particle production device 100 used for implementing a method for producing water-absorbent resin particles according to the present embodiment. Water-absorbent resin particles are widely used in various applications such as sanitary supplies such as disposable diapers and sanitary products, daily necessities such as pads for pet animals, industrial materials such as water-absorbent sheets for foods, water-blocking materials for cables, and antisweat materials, and water retention agents and soil conditioners for greening, agriculture, and horticulture. Water-absorbent resin particles are produced by polymerizing monomers as a raw material to produce a polymer.
As shown in Fig. 1, the water-absorbent resin particle production device 100 includes a polymerizer 1 and a concentrator 2. The polymerizer 1 polymerizes monomers as a raw material of water-absorbent resin particles to produce a slurry containing a hydrogel-like polymer (liquid containing a hydrogel-like polymer). The concentrator 2 distills off the liquid component from the slurry fed from the polymerizer 1 to concentrate the slurry, thereby producing a water-absorbent resin composition A1 that is a concentrated solution of the polymer. The production device 100 further includes a dryer 3, and the dryer 3 dries the water-absorbent resin composition A1 fed from the concentrator 2 (that is, the liquid component is volatilized). This operation provides a water-absorbent resin precursor A2 at a stage before water-absorbent resin particles P1 as a product are provided. The liquid component mainly contains a hydrocarbon dispersion medium and water when the hydrogel-like polymer is produced by reverse phase suspension polymerization, or mainly contains water when the hydrogel-like polymer is produced by aqueous solution polymerization.
As illustrated in Fig. 1, the production device 100 further includes a sorter 4, a cooler 5, and a classifier 6. The sorter 4 selects a portion of the water-absorbent resin precursor A2 having a water content of 20% or more from the water-absorbent resin precursor A2 fed from the dryer 3 and discharges the portion from a first discharge port 43. The sorter 4 discharges a remaining portion A3 of the water-absorbent resin precursor from another second discharge port 44 in order to feed the remaining portion A3 of the water-absorbent resin precursor to the cooler 5. The cooler 5 cools the water-absorbent resin precursor A3 discharged from the second discharge port 44, removes heat applied by the dryer 3, and then sends the water-absorbent resin precursor A3 to the classifier 6. The classifier 6 classifies the water-absorbent resin precursor A3 into several classes. A portion of the water-absorbent resin precursor A3 classified into a class that satisfies specifications as a product is referred to as the water-absorbent resin particles P1.
As shown in Fig. 1, the production device 100 further includes a controller 7 that controls the operation of each of the devices 1 to 6 to control the production process of the water-absorbent resin. The controller 7 is typically implemented as a computer controlled by a program. In addition to the operation of each of the devices 1 to 6, the controller 7 may be configured to control the operations of the pipes and first to fourth passage members L1 to L4 constituting the pathway connecting the devices 1 to 6, and valves that can be installed in these members.

<2. Configuration of Each Device>

Hereinafter, details of each of the devices 1 to 6 will be described in order while appropriately referring to various devices connected to each of the devices 1 to 6.

[Polymerizer]

The polymerizer 1 includes a polymerization tank (not shown). The polymerization tank is a container in which monomers, such as water-soluble ethylenically unsaturated monomers, to be a raw material of water-absorbent resin particles and a liquid component are stored such that a gas phase component is formed in the upper part. In the polymerization tank, the monomers and the liquid component are appropriately stirred with a stirrer (not shown) and heated with a heater (not shown), whereby the polymerization reaction of the monomers proceeds, and a hydrogel-like polymer is prepared. The stirrer and the heater are connected to the controller 7, and the operation thereof is controlled. As described above, the slurry containing the hydrogel-like polymer is accommodated in the polymerization tank. The slurry is discharged from the polymerizer 1 through a lower opening formed in the lower part of the polymerization tank so as to be sent to the concentrator 2.

One end of a pipe is connected to the lower opening of the polymerization tank. The other end of the pipe is connected to an opening formed in the upper part of the concentrator 2. The slurry discharged from the polymerizer 1 passes through the pipe and is charged into the concentrator 2 through the opening in the upper part of the concentrator 2. A valve is attached to the pipe, and opening and closing of the valve is controlled by the controller 7 to control communication of the slurry through the pipe.

[Concentrator]

The concentrator 2 includes a concentration tank (not shown). The slurry discharged from the polymerizer 1 flows into the concentration tank through the upper opening formed in the upper part of the concentrator 2 and is stored such that a gas phase component is formed in the upper part of the concentration tank. In the concentration tank, the slurry is appropriately stirred with a stirrer (not shown) and heated with a heater (not shown), so that the liquid component contained therein is distilled off, and the slurry is concentrated. The stirrer and the heater are connected to the controller 7, and the operation thereof is controlled. As described above, the concentrated solution containing the hydrogel-like polymer is accommodated in the concentration tank. The concentrated solution containing the hydrogel-like polymer is discharged from the concentrator 2 through a lower opening formed in the lower part of the concentration tank so as to be sent to the dryer 3 as the water-absorbent resin composition A1.

One end of a pipe is connected to the lower opening of the concentration tank. The other end of the pipe is connected to an upper opening formed in the upper part of the dryer 3. The water-absorbent resin composition A1 discharged from the concentrator 2 passes through the pipe and is charged into the dryer 3 through the upper opening of the dryer 3. A valve is attached to the pipe, and opening and closing of the valve is controlled by the controller 7 to control communication of the water-absorbent resin composition A1 through the pipe.

[Dryer]

The dryer 3 includes a drying chamber (not shown). The water-absorbent resin composition A1 discharged from the concentrator 2 flows into the drying chamber through the upper opening of the dryer 3. The dryer 3 heats the water-absorbent resin composition A1 in the drying chamber with a heater (not shown) to remove water contained in the water-absorbent resin composition A1. The water-absorbent resin precursor A2 obtained by drying the water-absorbent resin composition A1 is thus produced. The heater is connected to the controller 7, and the operation thereof is controlled. The heater dries the water-absorbent resin composition A1 so that the water content (mass%) of the water-absorbent resin composition A1 stored in the drying chamber as a whole is preferably 20% or less, more preferably 10% or less. The water-absorbent resin precursor A2 obtained after drying is discharged from the dryer 3 through a lower opening formed in the lower part of the drying chamber so as to be fed into the first passage member L1 described later.

The dryer 3 may be configured to dry the slurry discharged from the polymerizer 1 as the water-absorbent resin composition A1. That is, in the production device 100, the concentrator 2 may be omitted, and the polymerizer 1 may be directly connected to the dryer 3. In this case, the slurry discharged from the polymerizer 1 corresponds to the water-absorbent resin composition A1. The dryer 3 simultaneously concentrates and dries water-absorbent resin composition A1.

[First Passage Member]

The first passage member L1 is a member that defines a passage for the water-absorbent resin precursor A2 to move in a predetermined direction and constitutes a pathway connecting the dryer 3 and the classifier 6 together with the second passage member L2, the third passage member L3, and the fourth passage member L4 to be described later. One end of the first passage member L1 is connected to the lower opening of the drying chamber. The first passage member L1 is formed of, but not limited to, a pipe, and the water-absorbent resin precursor A2 can move in the first passage member L1 by gravity, for example. In the first passage member L1, a collector 30 is disposed so as to cross the moving direction of the water-absorbent resin precursor A2. More specifically, the collector 30 is installed in the first passage member L 1 such that an outer peripheral edge thereof is in contact with the inner surface of the first passage member L1. As a result, the internal space of the first passage member L1 is divided into an upstream passage located on the dryer 3 side with the collector 30 interposed therebetween and a downstream passage located on the sorter 4 side with the collector 30 interposed therebetween.

The collector 30 is a member for collecting powder aggregates B1 larger than a predetermined size from the water-absorbent resin precursor A2 flowing into the first passage member L1 and removing the powder aggregates B1 from the production device 100. The powder aggregates B1 are, for example, aggregates grown into lumps using the hydrogel-like polymer and the water-absorbent resin composition A1 attached to the inner wall surfaces of the polymerization tank, the concentration tank, and the drying chamber as nuclei, aggregates grown into lumps by flocculation of the water-absorbent resin composition A1, or the like. The powder aggregates B1 cannot pass through the gaps defined by the collector 30 due to its size and do not reach the downstream passage. On the other hand, the remaining water-absorbent resin precursor A2 passes through the gaps defined by the collector 30, reaches the downstream passage, and further moves through the downstream passage. Since the specific configuration of the collector 30 is disclosed in Patent Document 1, it is regarded as described in the present specification, and the detailed description thereof is omitted here.

The powder aggregates B1 removed by the collector 30 is a portion of the water-absorbent resin precursor larger than a water-absorbent resin precursor B2 selected by a sorting member 42 of the sorter 4 described later. The particle diameter of the powder aggregates B1 is, for example, 30 mm or more, preferably 50 mm or more.

An extraction opening 31 communicating with the upstream passage is formed in the first passage member L1. The extraction opening 31 defines an opening for taking out the powder aggregates B1 collected by the collector 30 to the outside of the first passage member L1. The collector 30 is disposed inside the first passage member L1 such that the collected powder aggregates B1 moves to the extraction opening 31 by gravity, for example. As a result, the powder aggregates B1 are taken out to the outside of the first passage member L1 through the extraction opening 31 so as not to close the gaps of the collector 30 and the upstream passage.

The water-absorbent resin precursor A2 that has flowed into the downstream passage of the first passage member L1 is sent to the sorter 4 via the second passage member L2 connected to the first passage member L1. The first passage member L1 and the second passage member L2 may be connected via a relay member 32, such as a hopper for temporarily storing the water-absorbent resin precursor A2, that relays the pathway of the water-absorbent resin precursor A2.

[Second Passage Member]

The second passage member L2 is a member that defines a passage for feeding the water-absorbent resin precursor A2 from the first passage member L1 to the sorter 4 and constitutes a pathway connecting the dryer 3 and the classifier 6. A method for transferring the water-absorbent resin precursor A2 from the first passage member L1 to the sorter 4 is not particularly limited, and a transfer method by gravity, a transfer method with a flow of an inert gas, a transfer method with a transfer mechanism such as a conveyor, and the like can be appropriately selected. The aspect of the second passage member L2 is not particularly limited as long as the second passage member L2 is configured to introduce the water-absorbent resin precursor A2 into an input port 40 of the sorter 4 according to the method for transferring the water-absorbent resin precursor A2. For example, the second passage member L2 can be constituted of a pipe, a transport pipe in which an air flow is generated, a conveyor, a feeder, or the like. A valve whose operation is controlled by the controller 7 to adjust the flow rate of the water-absorbent resin precursor A2 may be attached to the second passage member L2. A surface temperature adjusting device may be disposed in the second passage member L2 in order to adjust the surface temperature of the water-absorbent resin precursor A2 to be charged into the sorter 4. The surface temperature adjusting device is a device (heater) that heats the second passage member L2 and/or a device (cooler) that cools the second passage member L2 from the outside and/or the inside. For example, the surface temperature adjusting device includes a tubular member wound around the outer side of the second passage member L2 and can heat and/or cool the second passage member L2 by passing a heating medium such as water vapor inside the tubular member.

The lower limit of the surface temperature of the water-absorbent resin precursor A2 to be introduced into the sorter is 50°C or higher, preferably 55°C or higher, more preferably 60°C or higher. The upper limit thereof is 100°C or lower, preferably 95°C or lower, more preferably 90°C or lower, still more preferably 85°C or lower, particularly preferably 80°C or lower. To Summarize, the surface temperature of the water-absorbent resin precursor A2 to be introduced into the sorter may be 50°C to 100°C and is more preferably 60°C to 80°C.

According to findings by the present inventors, when the surface temperature of the water-absorbent resin precursor A2 falls within the above range, the portion of the water-absorbent resin precursor A2 having a water content of 20% or more can be efficiently selected (the mixing rate of the portion of the water-absorbent resin precursor A2 having a water content of less than 20% in the selected portion of the water-absorbent resin precursor B2 is kept low) by the sorter.

[Sorter]

The sorter 4 can include, for example, a vibratory sorter, a trommel (rotary sorter), and other sieving devices. The sorter 4 is disposed on a pathway connecting the dryer 3 and the classifier 6 to select the portion having a water content of 20% or more from the water-absorbent resin precursor A2 discharged from the dryer 3. The sorter 4 includes an input port portion 41, in which the input port 40 is formed, and the sorting member 42. The input port 40 is an opening through which the water-absorbent resin precursor A2 discharged from the dryer 3 and fed via the second passage member L2 is charged. In the present embodiment, the input port portion 41 is a casing that accommodates the sorting member 42. The sorting member 42 is connected to the inside of the input port portion 41 so as to define a sorting region 45 (as seen in Figs. 5A-5D) for sorting the water-absorbent resin precursor A2. As will be described later, the sorting member 42 may be connected to the input port portion 41 via another member connected to the input port portion 41, and the sorting region 45 may be defined by the sorting member 42 and at least one of the input port portion 41 and the other member. As described later, the sorting member 42 may be configured to be movable so as to impart movement to the water-absorbent resin precursor A2 in the sorting region 45, and the operation thereof may be controlled by the controller 7.

The water-absorbent resin precursor A2 discharged from the dryer 3 is charged into the sorter 4 with its surface temperature being 50°C to 100°C. The water-absorbent resin precursor A2 charged into the sorter 4 first enters the sorting region 45. In the casing, the first discharge port 43 and the second discharge port 44 that causes the inside and the outside to communicate are formed. The water-absorbent resin precursor A2 that has entered the sorting region 45 is divided into two by the sorting member 42 and is discharged to the outside of the sorter 4 from one of the discharge ports 43 and 44.

[Sorting Member]

The overall shape of the sorting member 42 can be appropriately selected from a planar shape, a cylindrical shape, a truncated cone shape, a rectangular tubular shape, and the like. A plurality of openings of a predetermined size that allow the inside and the outside of the sorting region 45 to communicate with each other are formed in the sorting member 42. As a result, in the water-absorbent resin precursor A2 that has entered the sorting region 45, a portion having a size exceeding the size of the openings of the sorting member 42 cannot pass through the openings of the sorting member 42 and is separated from a portion having a size that allows the portion to pass through the openings of the sorting member 42. The selected portion of the water-absorbent resin precursor A2 is removed from the pathway connecting the sorter 4 and the classifier 6 for the reason described later. Hereinafter, in the water-absorbent resin precursor A2, the portion that cannot pass through the openings of the sorting member 42 is referred to as the water-absorbent resin precursor B2, and the portion that can pass through the openings of the sorting member 42 is referred to as the water-absorbent resin precursor A3 in a distinguished manner.

The sorting member 42 of the present embodiment includes a net-like member 42a in which a large number of openings (also commonly referred to as the "mesh") are formed. As illustrated in Fig. 2A, for example, the net-like member 42a is formed by weaving a linear member made of metal or the like into a square lattice shape. In the example illustrated in Fig. 2A, the weave of the linear member is not particularly limited and may be a plain weave including a flat top type or may be a twill weave.

However, the member constituting the sorting member 42 is not limited to the net-like member 42a having a square lattice shape as illustrated in Fig. 2A and can be appropriately changed. Hereinafter, the shape of the sorting member 42 will be described in detail.

<Case Where Member Constituting Sorting Member 42 Is Net-Like Member 42a Having Square Lattice Shape>

When the member constituting the sorting member 42 is the net-like member 42a having a square lattice shape illustrated in Fig. 2A, the size of the openings of the net-like member 42a is defined by an aperture size E depending on the number of openings per inch and the wire diameter of the linear member. Specifically, the aperture size E of the sorting member 2 is defined by Equation (1) below.

$$\text{Equation (1)} \ldots E\ (\text{mm}) = (25.4/M) - d\ (\text{mm})$$

In Equation (1), M represents the number of openings per inch (25.4 mm), and d represents the wire diameter of the linear member.

The lower limit of the wire diameter d may be 0.8 mm or more, preferably 1.0 mm or more, more preferably 1.3 mm or more, particularly preferably 1.5 mm or more. The upper limit may be 2.2 mm or less, preferably 2.0 mm or less, more preferably 1.8 mm or less, particularly preferably 1.7 mm or less. To sum up, the wire diameter d may be 0.8 mm to 2.2 mm, preferably 1.0 mm to 2.0 mm, more preferably 1.3 mm to 1.8 mm, particularly preferably 1.5 mm to 1.7 mm. When the wire diameter d is within this range, the water-absorbent resin precursor A2 can be prevented from adhering to the sorting member 42, and water-absorbent resin particles can be produced with a high yield.

The lower limit of the aperture size E may be 7 mm or more or 8 mm or more and is preferably 9 mm or more or 9.5 mm or more, more preferably 9.8 mm or more. The upper limit may be 15 mm or less, 14 mm or less, 13 mm or less, 12 mm or less, or 11 mm or less and is preferably 10.5 mm or less, more preferably 10.2 mm or less. To sum up, the aperture size E may be 7 mm to 15 mm or less and is preferably 9 mm to 11 mm, more preferably 9.5 mm to 10.5 mm, still more preferably 9.8 mm to 10.2 mm. When the aperture size E is within the above range, the portion of the water-absorbent resin precursor A2 having a water content of 20% or more can be efficiently selected.

In addition, in the case where the sorting member 42 has a square lattice shape illustrated in Fig. 2A, the aperture ratio defined by Equation (2) below may be 55% or more and is preferably 60% or more, more preferably 65% or more, particularly preferably 70% or more. The upper limit thereof may be 90% or less, preferably 85% or less, more preferably 80% or less, particularly preferably 77% or less.

$$\text{Equation (2) ... Aperture ratio (\%)} = (E/E + d)^2 \times 100$$

When the aperture ratio is within the above range, the portion of the water-absorbent resin precursor A2 having a water content of 20% or more can be efficiently selected.

<Case Where Member Constituting Sorting Member Is Net-Like Member 42a Having Shape Other than Square Lattice Shape>

In addition, for example, as illustrated in Figs. 2B to 2D, when the shape of the openings of the net-like member 42a is, for example, a rectangle, a parallelogram, a hexagon, or the like, the minimum interval E among the intervals between the linear members parallel to each other defining one opening is set as the size of the opening. In this case, in the net-like member 42a, an average value Em of the intervals E measured for 10 different openings randomly selected is set as the size of the openings of the net-like member 42a.

As another aspect of the member constituting the sorting member 42, for example, as illustrated in Figs. 3A and 3B, a plate-like member 42b in which a plurality of openings (like the net-like member 42a, they are also referred to as "mesh") are formed can be exemplified. The plate-like member 42b is, for example, a metal plate in which a plurality of through-holes are formed by punching. For example, as shown in Fig. 3A, when the shape of the openings of the plate-like member 42b in a state of being developed on a plane is a circle, the diameter E of the circle is set as the size of one opening. Further, for example, as shown in Fig. 3B, when the shape of the openings of the plate-like member 42b is an oval, the interval E between the mutually parallel peripheral edges defining the opening is set to the size of one opening. Furthermore, when the shape of the openings of the plate-like member 42b is, for example, a rectangle, a parallelogram, a hexagon, or the like, the minimum interval E among the intervals between the peripheral edges parallel to each other defining the opening is set as the size of one opening in the same manner as the net-like member 42a. Also for the plate-like member 42b, similarly to the net-like member 42a, an average value Em of the intervals E measured for 10 different openings randomly selected is set as the size of the openings of the plate-like member 42b.

Even when the sorting member 42 is formed of the net-like member 42a or the plate-like member 42b exemplified in Figs. 2B to 3B, the size (aperture size) of the openings of the sorting member 42 is preferably in the above-described range.

In addition, in the case where the sorting member 42 is formed of the net-like member 42a or the plate-like member 42b illustrated in Figs. 2B to 3B, the aperture ratio of the sorting member 42 can be appropriately selected according to the overall shape of the sorting member 42. Fig. 4 is a diagram illustrating a method for calculating the aperture ratio of the sorting member 42. In the sorting member 42 in a state of being developed on a plane, a smallest rectangle R among rectangles formed by connecting the centers of the opening shapes is defined, and the aperture ratio can be defined as a ratio between a total area SA occupied by the openings in the region surrounded by the rectangle R and an area SR of the rectangle R. In Fig. 4, the case where the shape of the openings of the sorting member 42 is a regular hexagon is exemplified, but the above-described method for calculating the aperture ratio is also applicable to the sorting member 42 in which openings having another shape are formed.

Even when the sorting member 42 is formed of the net-like member 42a or the plate-like member 42b exemplified in Figs. 2B to 3B, the aperture ratio is preferably in the above-described range.

[Configuration Example of Sorter]

Figs. 5A to 5D illustrate configuration examples of the sorter 4. As illustrated in Figs. 5A to 5D, the orientation of the input port 40 and the positional relationship between the input port portion 41 and the sorting member 42 are not particularly limited but can be appropriately selected. In addition, the shape of the input port portion 41, the orientation of the input port 40, and the like can be appropriately selected according to the overall shape of the sorting member 42. The first discharge port 43 formed in the sorter 4 is an opening for taking out the water-absorbent resin precursor B2 from the inside of the sorting region 45 in order to prevent clogging of the sorting member 42. The second discharge port 44 formed in the sorter 4 is an opening for discharging the water-absorbent resin precursor A3 from the sorter 4 and sending the water-absorbent resin precursor A3 to the third passage member L3 defining a pathway connected to the classifier 6 and further to the cooler 5 and the fourth passage member L4.

Fig. 5A shows an example of the case where the sorting member 42 has a flat plate shape. In this example, the sorting member 42 is coupled to the input port portion 41 via a passage member 46 defining a passage connected to the input port 40. The passage member 46 is connected to the input port portion 41 and defines the sorting region 45 together with the sorting member 42. In the water-absorbent resin precursor A2 input through the input port 40, the water-absorbent resin precursor A3 passes through the plurality of openings of the sorting member 42, goes out of the sorting region 45, and is discharged from the second discharge port 44. On the other hand, the water-absorbent resin precursor B2 is discharged from the first discharge port 43. The sorting member 42 may be inclined with respect to the horizontal direction so as to more quickly move the water-absorbent resin precursor B2 to the first discharge port 43. The sorting member 42 may be configured to be vibrated by a vibration mechanism (not shown) to impart movement to the water-absorbent resin precursor A2 in order to prevent clogging due to blocking of the openings.

Fig. 5B shows an example of the case where the sorting member 42 has a cylindrical or rectangular tubular shape. In this example, both ends in the cylinder axis direction of the sorting member 42 are opened. The sorting member 42 has both ends directed in the horizontal direction and is connected to the input port portion 41 so that the ends are respectively connected to the input port 40 and the first discharge port 43. In the water-absorbent resin precursor A2 input through the input port 40, the water-absorbent resin precursor A3 passes through the plurality of openings of the sorting member 42, goes out of the sorting region 45, and is discharged from the second discharge port 44. On the other hand, the water-absorbent resin precursor B2 is discharged from the first discharge port 43 through one end of the sorting member 42. The sorting member 42 may be configured to be rotated with respect to the cylinder axis by a rotation mechanism (not shown) to impart movement to the water-absorbent resin precursor A2 in order to prevent clogging due to blocking of the openings. In order to more quickly move the water-absorbent resin precursor B2 to the first discharge port 43, the sorter 4 may include a blade member that is movable inside the sorting member 42 from an end on the input port 40 side to an end of the first discharge port 43. Further, the shape of the sorting member 42 may be a truncated cone.

Fig. 5C shows another example of the case where the sorting member 42 has a cylindrical or rectangular tubular shape. In this example, the sorting member 42 is connected to the input port portion 41 such that one end in the cylinder axis direction of the sorting member 42 faces upward in the vertical direction and the other end faces downward in the vertical direction. The end (lower end) facing downward of the sorting member 42 is not opened and is formed continuously with a side peripheral portion of the sorting member 42. That is, a plurality of openings having a predetermined size are also formed at the lower end of the sorting member 42. In the water-absorbent resin precursor A2 input through the input port 40, the water-absorbent resin precursor A3 passes through the plurality of openings of the sorting member 42, goes out of the sorting region 45, and is discharged from the second discharge port 44. The sorting member 42 is connected to a passage member 47 that defines a passage connecting the sorting region 45 and the first discharge port 43 near the lower end. The inner diameter of the passage of the passage member 47 is larger than the size of the water-absorbent resin precursor B2. With this configuration, the water-absorbent resin precursor B2 passes through the passage in the passage member 47 and is discharged from the first discharge port 43. The sorting member 42 may be configured to be vibrated by a vibration mechanism (not shown) to impart movement to the water-absorbent resin precursor A2 in order to prevent clogging due to blocking of the openings. The lower end of the sorting member 42 may be inclined with respect to the horizontal direction so as to more quickly move the water-absorbent resin precursor B2 to the passage member 47. Further, the shape of the sorting member 42 may be a truncated cone.

Fig. 5D shows still another example of the case where the sorting member 42 of the sorter 4 has a cylindrical or rectangular tubular shape. This example is different from the example of Fig. 5B in that the sorting member 42 is disposed such that the cylinder axis of the sorting member 42 is inclined with respect to the horizontal direction. The sorter 4 may be configured such that the inclination angle of the sorting member 42 can be changed within a certain range. In other respects, the description of the example of Fig. 5B applies, and thus the description thereof will be omitted.

As described above, the sorter 4 is configured to sort the water-absorbent resin precursor A2 based on the size (particle diameter) of the water-absorbent resin precursor A2 having a surface temperature of 50°C to 100°C. In the present specification, for convenience, the size of the water-absorbent resin precursor A2 serving as the reference of sorting is a value specified as shown in Fig. 6. Specifically, circumscribed rectangles Rx, Ry, and Rz of the projected shapes of the water-absorbent resin precursor A2 onto three planes orthogonal to one another are defined, and the average value of the long sides of these circumscribed rectangles Rx, Ry, and Rz is taken as the size (particle diameter) of the water-absorbent resin precursor A2. In the present embodiment, a portion of the water-absorbent resin precursor A2 having a surface temperature of 50°C to 100°C and a size determined in this manner exceeding the size (predetermined size) of the openings of the sorting member 42 is intended to be selected as the water-absorbent resin precursor B2. In the present embodiment, a portion of the water-absorbent resin precursor A2 having a surface temperature of 50°C to 100°C and a size determined in this manner equal to or smaller than the size of the openings of the sorting member 42 is intended to be fed to the classifier 6 as the water-absorbent resin precursor A3.

[Reason for Sorting Water-Absorbent Resin Precursor]

The reason why the portion of the water-absorbent resin precursor A2 having a water content of 20% or more is selected and the reason why the water-absorbent resin precursor B2 having a surface temperature of 50°C to 100°C and having a size exceeding the size of the openings of the sorting member 42 is efficiently selected as the portion of the water-absorbent resin precursor A2 having a water content of 20% or more will be described below.

The water-absorbent resin precursor A2 is dried by the dryer 3 so that the water content as a whole will be at most 20% or less. However, the degree of drying of each piece of the water-absorbent resin precursor A2 varies depending on the temperature distribution in the drying chamber. Therefore, the water-absorbent resin precursor A2 as individuals includes pieces that are not sufficiently dried. According to the study by the inventors, such pieces of the water-absorbent resin precursor A2 contain a relatively large amount of water even in a state at a relatively high temperature after drying and thus affect the quality of the water-absorbent resin particles P1, such as the water absorption capacity under pressure and the water absorption rate. That is, due to the presence of the portion of the water-absorbent resin precursor A2 having a water content of 20% or more, variations in the water absorption capacity under pressure and the water absorption rate of the water-absorbent resin particles P1 after classification become large, and it becomes more difficult to control the water absorption capacity under pressure and the water absorption rate of water-absorbent resin particles P1.

The inventors have confirmed through experiments described later that when a portion having a size exceeding the predetermined size is selected by the sorter 4 from the water-absorbent resin precursor A2 having a surface temperature of 50°C to 100°C after drying, a portion of the water-absorbent resin precursor A2 having a water content of 20% or more is efficiently selected. The predetermined size is determined by the size of the openings of the sorting member 42 included in the sorter 4. Therefore, the predetermined size of the water-absorbent resin precursor A2 serving as the reference of sorting may be 7 mm to 15 mm or less, preferably 9 mm to 11 mm, more preferably 9.5 mm to 10.5 mm, still more preferably 9.8 mm to 10.2 mm as described above for the size of the openings of the sorting member 42. According to experiments described later, it has been confirmed that the water content of the water-absorbent resin precursor B2 selected using the sorter 4 including the sorting member 42 provided with openings having a size of 10 mm is 60% or more. As described above, when the water-absorbent resin precursor A2 discharged from the dryer 3 is sorted by the sorter 4, it can be said that the portion having a relatively high water content is selected as the water-absorbent resin precursor B2.

The water-absorbent resin precursor B2 to be selected has only to have a water content of 20% or more and may have a water content of 30% or more or 40% or more, preferably 50% or more, more preferably 60% or more. The upper limit thereof may be 85% or less, preferably 75% or less or 70% or less, more preferably 65% or less.

The inventors conducted experiments to confirm that, when the water-absorbent resin precursor A2 is sorted while the surface temperature is relatively high after drying, and the remaining water-absorbent resin precursor A3 is classified by the classifier 6, the variations in water absorption capacity under pressure and water absorption rate of the classified water-absorbent resin particles P1 are further reduced. As described above, it can be said that by removing the water-absorbent resin precursor B2 from the pathway connecting the dryer 3 and the classifier 6, the water-absorbent resin particles P1 in which variations in water absorption capacity under pressure and water absorption rate are further suppressed can be obtained.

[Third Passage Member]

The third passage member L3 is a member connected to the second discharge port 44 and an upper opening formed in the upper part of the cooler 5. The third passage member L3 defines a passage for feeding the water-absorbent resin precursor A3 discharged from the second discharge port 44 to the cooler 5 and constitutes a pathway connecting the dryer 3 and the classifier 6. A method for transferring the water-absorbent resin precursor A3 to the cooler 5 is not particularly limited, and a transfer method by gravity, a transfer method with a flow of an inert gas, a transfer method with a transfer mechanism such as a conveyor, and the like can be appropriately selected. The aspect of the third passage member L3 is not particularly limited as long as the third passage member L3 is configured to introduce the water-absorbent resin precursor A3 into the upper opening formed in the upper part of the cooler 5 according to the method for transferring the water-absorbent resin precursor A3. For example, the third passage member L3 can be constituted of a pipe, a transport pipe in which a flow of an inert gas is generated, a conveyor, a feeder, or the like. A valve whose operation is controlled by the controller 7 to adjust the flow rate of the water-absorbent resin precursor A2 may be attached to the third passage member L3.

[Cooler]

The cooler 5 is disposed on a pathway connecting the dryer 3 and the classifier 6 and includes a cooling chamber (not shown). The water-absorbent resin precursor A3 discharged from the second discharge port 44 of the sorter 4 flows into the cooling chamber through the upper opening of the cooler 5. The cooler 5 cools the water-absorbent resin precursor A3 in the cooling chamber with a cooling device (not shown) to remove heat applied to the water-absorbent resin precursor A3 by the dryer 3. The cooling device is connected to the controller 7, and the operation thereof is controlled. The water-absorbent resin precursor A3 after cooling is discharged from the cooler 5 through a lower opening formed in the lower part of the cooler 5 and communicable with the cooling chamber so as to be sent to the classifier 6.

[Fourth Passage Member]

The fourth passage member L4 is a member connected to the lower opening of the cooler 5 and an upper opening formed in the upper part of the classifier 6. The fourth passage member L4 defines a passage for feeding the water-absorbent resin precursor A3 discharged from the lower opening of the cooler 5 to the classifier 6 and constitutes a pathway connecting the dryer 3 and the classifier 6. A method for transferring the water-absorbent resin precursor A2 after cooling to the classifier 6 is not particularly limited, and a transfer method by gravity, a transfer method with a flow of an inert gas, a transfer method with a transfer mechanism such as a conveyor, and the like can be appropriately selected. The aspect of the fourth passage member L4 is not particularly limited as long as the fourth passage member L4 is configured to introduce the water-absorbent resin precursor A3 into the classifier 6 through the upper opening according to the method for transferring the water-absorbent resin precursor A3. For example, the fourth passage member L4 can be constituted of a pipe having one end connected to the lower opening of the cooler 5 and the other end connected to the upper opening of the classifier 6, a transport pipe in which a flow of an inert gas is generated, a conveyor, a feeder, or the like. A valve whose operation is controlled by the controller 7 to adjust the flow rate of the water-absorbent resin precursor A3 may be attached to the fourth passage member L4.

[Classifier]

The classifier 6 is a device that classifies the water-absorbent resin precursor A3 into groups of water-absorbent resin particles having desired particle size distributions. Examples of the classifier 6 include a vibrating sifter (unbalance weight drive type, resonance type, vibration motor type, electromagnetic type, circular vibration type, and the like), a flat sifter (horizontal motion type, horizontal circle-linear motion type, three-dimensional circular motion type, and the like), a moving sieve, a forced stirring sieve, a mesh surface vibration sieve, a pneumatic sieve, and a sonic sifter. The classifier 6 of the present embodiment has a plurality of flat sifters. The plurality of flat sifters are combined in such an order that the sieves with larger sizes of the mesh are disposed on the upper side and the sieves with smaller sizes of the mesh are disposed on the lower side. As a result, the water-absorbent resin precursor A3 sent to the classifier 6 and introduced into the flat sifters is classified into classes defined by the flat sifters. A portion classified into a class conforming to the standard as a product is obtained as the water-absorbent resin particles P1.

<3. Method for Producing Water-Absorbent Resin Particles>

Hereinafter, a method for producing water-absorbent resin particles according to an embodiment of the present invention will be described with reference to the drawings. Fig. 7 is a flowchart showing a flow of steps performed at the time of producing the water-absorbent resin particles using the production device 100. Steps S1 to S7 are mainly controlled by the controller 7.

In Step S1, the polymerizer 1 performs polymerization. Monomers as a raw material of the water-absorbent resin particles and a liquid component (hydrocarbon dispersion medium) are accommodated in the polymerization tank of the polymerizer 1. When these are stirred and heated in the polymerization tank, the polymerization reaction of the monomers proceeds, and a slurry containing a hydrogel-like polymer is prepared. The prepared slurry is sent to the concentrator 2.

In Step S2, the concentrator 2 performs concentration. The slurry sent from the polymerizer 1 is stored in the concentration tank of the concentrator 2. The slurry is concentrated by being stirred and heated in the concentration tank. Thereby, a concentrated solution containing the hydrogel-like polymer, that is, the water-absorbent resin composition A1, is obtained. The water-absorbent resin composition A1 is sent to the dryer 3.

In Step S3, the dryer 3 performs drying. The water-absorbent resin composition A1 fed from the concentrator 2 is stored in the drying chamber of the dryer 3. The water-absorbent resin composition A1 is dried in the drying chamber to remove water and becomes the water-absorbent resin precursor A2. Step S3 is an example of a "step of drying a water-absorbent resin composition to provide a water-absorbent resin precursor" in the present invention. The obtained water-absorbent resin precursor A2 is fed to the first passage member L1 connected to the sorter 4.

In Step S4, the powder aggregates B1 are collected by the collector 30 installed in the first passage member L1 and removed from the first passage member L1. The remaining portion of the water-absorbent resin precursor A2 is sent to the sorter 4 with its surface temperature being 50°C to 100°C.

In Step S5, the sorter 4 sorts the water-absorbent resin precursor A2 into the water-absorbent resin precursor B2 and the water-absorbent resin precursor A3. The water-absorbent resin precursor B2 is removed as the portion of the water-absorbent resin precursor A2 having a water content of 20% or more. The remaining water-absorbent resin precursor A3 is sent to the cooler 5. Step S5 is an example of a "selecting and removing a portion of the water-absorbent resin precursor, the portion having a water content of 20% or more, from the water-absorbent resin precursor" of the present invention.

In Step S6, the cooler 5 performs cooling. The water-absorbent resin precursor A3 fed from the sorter 4 is accommodated in the cooling chamber of the cooler 5 and cooled to remove heat applied by the dryer 3. The water-absorbent resin precursor A3 after cooling is sent to the classifier 6.

In Step S7, the classifier 6 classifies the water-absorbent resin precursor A3. As a result, classification is completed, and the water-absorbent resin particles P1 conforming to the standard as a product are obtained. Step S7 is an example of a "classifying the remaining portion of the water-absorbent resin precursor to provide classified water-absorbent resin particles" in the present invention. The water-absorbent resin particles P1 also include water-absorbent resin particles to which an additive is added as necessary after classification by the classifier 6.

<4. Features>

With the production device 100 and the method for producing water-absorbent resin particles using the production device 100 according to the above embodiment, the water-absorbent resin precursor A2 is sorted by the sorter 4 disposed in the middle of the pathway connecting the dryer 3 and the classifier 6. As a result, the portion of the water-absorbent resin precursor A2 having a relatively high water content of 20% or more even after drying can be selected as the water-absorbent resin precursor B2 and removed from the production device 100. By classifying the water-absorbent resin precursor A3 after removing the water-absorbent resin precursor B2 using the classifier 6, it is possible to suppress variations in quality such as the water absorption capacity under pressure and the water absorption rate according to the size of the water-absorbent resin particles P1 to be obtained.

<5. Modifications>

Although one embodiment of the present invention has been described above, the present invention is not limited to the above embodiment, and various modifications can be made without departing from the gist thereof. For example, the following modifications are possible.

(1) The collector 30 and Step S4 may be omitted. That is, the first passage member L1 may be arranged without providing the collector 30.

(2) The cooler 5 and Step S6 may be omitted. That is, the production device 100 may not include the cooler 5 but may be configured such that the sorter 4 and the classifier 6 are directly connected.

(3) The openings of the sorting member 42 may have a slit shape. In this case, the average value of the intervals between the slits corresponds to the size of the openings of the sorting member 42.

(4) The relay member 32 and the second passage member L2 may be omitted. That is, the first passage member L1 may also serve as the second passage member L2, and the other end of the first passage member L1 may be connected to the input port 40 of the sorter 4.

EXAMPLES

Hereinafter, examples of the present invention will be described, but the present invention is not limited to the following examples.

<Experiment 1>

A production device similar to the production device 100 according to the above embodiment was prepared, and water-absorbent resin particles were produced by the production method according to the above embodiment using the production device. Then, the water contents of the water-absorbent resin precursor selected to be removed from the production device 100 and the water-absorbent resin precursor sent to the classifier were each measured by the method described later. Hereinafter, a detailed method for producing water-absorbent resin particles will be described.

[1. Preparation of Aqueous Solution of First-Step Monomers]

In a container for preparation of first-step monomers, 28.8 parts by mass of a 80-mass% aqueous solution of acrylic acid as water-soluble ethylenically unsaturated monomers was added, and 31.9 parts by mass of a 30-mass% aqueous solution of sodium hydroxide as an alkaline neutralizing agent was added dropwise while cooling to perform neutralization so that the degree of neutralization was 76 mol% of the acid groups of the water-soluble ethylenically unsaturated monomers. Subsequently, 1.15 parts by mass of a 2-mass% aqueous solution of potassium persulfate as a radical polymerization initiator, 0.14 parts by mass of a 3-mass% aqueous solution of ethylene glycol diglycidyl ether as a crosslinking agent, and 11.0 parts by mass of water were added and dissolved to prepare an aqueous solution of the first-step monomers, and the solution was held at a temperature of 20 to 21°C.

[2. Transfer to Polymerizer and Input of Additive]

A polymerizer was charged with 90.0 parts by mass of n-heptane as a hydrocarbon dispersion medium and 2.02 parts by mass of a 10-mass% n-heptane solution of a maleic anhydride-ethylene-propylene copolymer as a dispersion stabilizer, and these components were stirred with a stirring device installed in the polymerizer. Subsequently, the whole of the aqueous solution of the first-step monomers was added to the polymerizer. Further, while the contents in the polymerizer were heated, 2.02 parts by mass of a 10-mass% n-heptane solution of a sucrose fatty acid ester was added to the polymerizer. Blowing of nitrogen into the polymerizer main body was started, and the inside of the polymerizer was purged with nitrogen.

[3. First-Step Polymerization Reaction]

Subsequently, the contents in the polymerizer were heated to 64°C to start the first-step polymerization reaction, thereby obtaining a first-step reaction mixture.

[4. Preparation of Aqueous Solution of Second-Step Monomers]

On the other hand, an aqueous solution of second-step monomers was prepared in another container. Specifically, in another container, 41.3 parts by mass of a 80-mass% aqueous solution of acrylic acid as water-soluble ethylenically unsaturated monomers was added, and 45.7 parts by mass of a 30-mass% aqueous solution of sodium hydroxide as an alkaline neutralizing agent was added dropwise while cooling to perform neutralization so that the degree of neutralization was 76 mol% of the acid groups of the water-soluble ethylenically unsaturated monomers. Subsequently, 1.45 parts by mass of a 2-mass% aqueous solution of potassium persulfate as a radical polymerization initiator, 0.12 parts by mass of a 3-mass% aqueous solution of ethylene glycol diglycidyl ether as a crosslinking agent, and 1.51 parts by mass of water were added and dissolved to prepare the aqueous solution of the second-step monomers.

[5. Charging of Aqueous Solution of Second-Step Monomers]

Subsequently, the whole of the aqueous solution of the second-step monomers was added to the polymerizer. Blowing of nitrogen into the polymerizer was started, and the inside of the polymerizer was purged with nitrogen.

[6. Second-Step Polymerization Reaction]

Subsequently, the contents in the polymerizer were heated to 57°C to start the second-step polymerization reaction. After the completion of the polymerization reaction, a second-step reaction mixture (a slurry containing a hydrogel-like polymer) was obtained.

[7. Concentration Step]

The second-step reaction mixture was transferred to a concentrator equipped with a stirring device. The second-step reaction mixture was heated to 80 to 90°C while being stirred with the stirring device. n-Heptane and water were separated by azeotropic distillation of n-heptane and water, n-heptane was returned to the concentrator, and a predetermined amount of water was removed to the outside of the system.

[8. Drying Step]

The water-absorbent resin composition obtained after concentration was transferred to a dryer equipped with a stirring device. The water-absorbent resin composition was heated so that the inside of the dryer was 80 to 110°C while being stirred with the stirring device, and n-heptane and water were removed to the outside of the system by azeotropic distillation of n-heptane and water. After a predetermined amount of water was removed to the outside of the system, 1.4 parts by mass of a 3-mass% aqueous solution of ethylene glycol diglycidyl ether as a post-crosslinking agent was added, and the mixture was further heated and dehydrated to obtain a post-crosslinked water-absorbent resin (water-absorbent resin precursor).

[9. Transfer of Water-Absorbent Resin Precursor and Adjustment of Surface Temperature]

The water-absorbent resin precursor discharged from the dryer was transferred to a sorter through pipes serving as first and second flow path members. At this time, the pipes were heated at about 80°C with a heater (surface temperature adjusting device) to adjust the surface temperature of the water-absorbent resin precursor moving inside the pipes to 60°C or higher.

A portion of the water-absorbent resin precursor passing through the second flow path member was sampled 4 times, and the surface temperatures of the respective samples were measured with a waterproof digital thermometer (SK-1260, manufactured by Sato Keiryoki Mfg. Co., Ltd.), and the result showed that the surface temperatures were 63.1°C, 68.2°C, 77.4°C, and 78.2°C, respectively.

[10. Sorting Step]

The water-absorbent resin precursor transferred from the dryer was treated with a sorter (trommel sorter) to remove aggregates having a size of 10 mm or more.

Specifically, the trommel sorter has the configuration shown in Fig. 5B.

The trommel sorter has a casing and a rotatable sorting member, and the sorting member is a net-like member having the shape of Fig. 2A (square lattice shape, wire diameter: 1.6 mm, aperture size: 10 mm, aperture ratio: 74%) and is constituted of a tubular net-like member having an inner diameter of 42 cm and a length of 66 cm. The sorting member is disposed such that the cylinder axis direction and the horizontal plane are substantially parallel to each other. The sorting member is configured such that the water-absorbent resin precursor introduced through a first opening (the opening closest to the input port of the sorter) travels toward a second opening (the opening closest to the first discharge port of the sorter). Specifically, a blade member is provided inside the sorting member, and the water-absorbent resin precursor is propelled from the first opening toward the second opening in accordance with the rotation of the sorting member.

The water-absorbent resin precursor introduced from the first opening of the sorting member was sorted as it traveled toward the second opening. That is, in the water-absorbent resin precursor, particles having a small particle diameter (size) moved to the second discharge port of the sorter through the mesh of the sorting member, while those (aggregates) having a large particle diameter (size) moved to the first discharge port of the sorter without passing through the mesh of the sorting member.

[11. Classifying Step]

The water-absorbent resin precursor that had moved to the second discharge port of the sorter was transferred to a classifying device and classified with a classifier equipped with a sieve having an aperture size of 298 to 805 μm to obtain water-absorbent resin particles having a median particle diameter of 380 μm. The method for measuring the median particle diameter will be described later. With 100 parts by mass of the water-absorbent resin particles, 0.5 parts by mass of silica as an additive was mixed, so that water-absorbent resin particles were obtained as a final product.

[Method for Measuring Water Content]

On a stainless steel petri dish caused to have a constant weight (Wa (g)) in advance, 2.0 g of the water-absorbent resin precursor was placed and precisely weighed (Wb (g)). The precursor was dried for 2 hours in a hot air dryer (manufactured by ADVANTEC Group) with an internal temperature set to 105°C, and then allowed to cool in a desiccator, and the mass (Wc (g)) after drying was measured. The water content of the water-absorbent resin precursor was calculated from the following equation.

$$\text{Water content (mass\%)} = [(Wb - Wa) - (Wc - Wa)]/(Wb - Wa) \times 100$$

[Method for Measuring Median Particle Diameter]

JIS standard sieves were combined in the order of a sieve with an aperture size of 850 μm, a sieve with an aperture size of 600 μm, a sieve with an aperture size of 500 μm, a sieve with an aperture size of 400 μm, a sieve with an aperture size of 300 μm, a sieve with an aperture size of 250 μm, a sieve with an aperture size of 150 μm, and a pan from the top, 100 g of the water-absorbent resin particles before adding the above silica was put onto the uppermost sieve of the combined sieves and shaken for 10 minutes using a Ro-Tap shaker to perform classification. After classification, the mass of the water-absorbent resin particles remaining on each sieve was calculated as a mass percentage with respect to the total amount, the mass was integrated in the descending order of particle diameters, and the relationship between the aperture size of the sieve and the integrated value of the mass percentage of the water-absorbent resin particles remaining on the sieve was plotted on log-probability paper. The plots on the probability paper were connected by a straight line, and the particle diameter corresponding to an integrated mass percentage of 50 mass% was defined as the median particle diameter (μm) of the water-absorbent resin particles.

<Result>

In [10. Sorting Step], a portion of the water-absorbent resin precursor that had moved to the first discharge port was sampled twice, and the water content of each sample was measured. As a result, the contents were 60.1 mass% and 64.8 mass%, respectively. The water content of the water-absorbent resin precursor that had moved to the second discharge port was also measured in the same manner as described above, and consequently it was confirmed that a portion of the water-absorbent resin precursor having a high water content was effectively selected by the sorting step because the water content was less than 20 mass%.

<Experiment 2>

Water-absorbent resin particles P2 (example) as a final product produced by the method according to Experiment 1 and water-absorbent resin particles P3 (comparative example) having a median particle diameter of 365 μm produced by the same method as Experiment 1 except that the sorting step was omitted were prepared, and each of the particles was sampled 3 times. For each sample, the water absorption amount under pressure indicating the water absorption capacity under pressure and the water absorption rate were measured.

[Method for Measuring Water Absorption Amount under Pressure]

Fig. 8 shows a measurement device 9 of the water absorption amount under pressure. The measurement device 9 includes a burette unit 90, a conduit 91, a measurement stage 92, and a measurement unit 93. The burette unit 90 includes a burette 900, a first cock 902 connected to a lower portion of the burette 900, and an air introduction pipe 901. The tip of the air introduction pipe 901 is connected to a second cock 903. The burette unit 90 and the measurement stage 92 are connected by the conduit 91. A through-hole communicating with the conduit 91 is formed in the measurement stage 92. The measurement unit 93 includes a cylindrical portion 930 having a cylindrical shape made of Plexiglas, a nylon mesh 931 bonded and fixed to a bottom portion of the cylindrical portion 930, and a weight 932.

The inner diameter of the through-hole of the measurement stage was 2 mm, and the inner diameter of the cylindrical portion 930 was 20 mm. The aperture size of the nylon mesh 931 used in the experiment was 57 μm (255 mesh). The weight 932 had a diameter of 19 mm and a mass of 60 g. The weight 932 is placed on the sample of the water-absorbent resin particles P2 or P3 so that a load of 0.3 PSI can be applied to the water-absorbent resin particles P2 or P3.

The measurement was performed in a room at 25°C. First, the first cock 902 and the second cock 903 were closed, and 0.9-mass% saline solution adjusted to 25°C was poured into the burette 900 through an upper opening of the burette 900. Thereafter, the upper opening of the burette 900 was closed with a rubber stopper. Subsequently, the first cock 902 and the second cock 903 were opened, and the height of the measurement stage 92 was adjusted such that the height of the surface of the 0.9-mass% saline solution in the through-hole of the measurement stage 92 was the same as the height of the upper surface of the measurement stage 92.

A measurement unit 93 was separately prepared for each of samples of the water-absorbent resin particles P2 and P3 and placed on the measurement stage 92. Specifically, 0.1000 ± 0.0002 g of the water-absorbent resin particles P2 or P3 were uniformly sprayed on the nylon mesh 931, and the measurement unit 93 with the weight 932 placed thereon was placed on the measurement stage 92. The measurement unit 93 was aligned such that the cylinder axis of the cylindrical portion 930 passed through the through-hole of the measurement stage 92.

The amount W (ml) of the 0.9-mass% saline solution decreased from the inside of the burette 900 indicates the amount of the 0.9-mass% saline solution absorbed by the water-absorbent resin particles P2 or P3. The amount W (ml) was read, and the water absorption amount AUL (ml/g) under pressure of the water-absorbent resin particles P2 or P3 60 minutes after the water-absorbent resin particles P2 or P3 started to absorb water was calculated according to the following equation.

$$AUL = W/0.1000$$

[Method for Measuring Water Absorption Rate]

Into a beaker having an internal volume of 100 mL, 50 ± 0.1 g of a physiological saline solution adjusted to a temperature of 25 ± 0.2°C in a constant temperature water bath was weighed out. Next, the solution was stirred at a rotation speed of 600 rpm (conventional vortex method) using a magnetic stirrer bar (8 mmφ × 30 mm, without ring) to generate a vortex. To the physiological saline solution, 2.0 ± 0.002 g the of water-absorbent resin particles P2 and P3 were each added at a time. The time [sec] from the addition of the water-absorbent resin particles P2 and P3 to the point of time at which the vortex on the liquid surface converged was measured, and the time was obtained as the water absorption rate of the water-absorbent resin particles P2 and P3. The water absorption rate is a parameter affected by the particle diameter of the water-absorbent resin particles (generally, the larger the particle diameter is, the slower the water absorption rate is). Therefore, as an index for evaluating the water absorption rate of the water-absorbent resin particles P2 and P3, a value, V/MPS, obtained by dividing the water absorption rate (V (sec)) by the median particle diameter (MPS (μm)) of each of the water-absorbent resin particles P2 and P3 was used for convenience. The method for measuring the median particle diameter is as described above in Example 1.

<Result>

The measurement results for the water-absorbent resin particles P2 and P3 for three samples are shown in the graphs of Figs. 9A and 9B, respectively. Fig. 9A is a graph of the water absorption amount AUL (ml/g) under pressure. As can be seen from Fig. 9A, in the water-absorbent resin particles P2 according to the example, the variation in the water absorption amount AUL under pressure was smaller than that in the water-absorbent resin particles P3 according to the comparative example. In the water-absorbent resin particles P2 according to the example, the numerical values of the water absorption amount AUL under pressure were higher on the whole. Specifically, the average value of the water absorption amounts AUL under pressure of 3 samples of the water-absorbent resin particles P2 was 34.7, whereas the average value of the water absorption amounts AUL under pressure of 3 samples of the water-absorbent resin particles P3 was 32. That is, it was confirmed that for the water-absorbent resin particles P2 according to the example, the water absorption amount AUL under pressure was improved by 2.7 (ml/g) as compared with that of the water-absorbent resin particles P3 according to the comparative example.

Fig. 9B is a graph of the index V/MPS for evaluating the water absorption rate. As can be seen from Fig. 9B, in the water-absorbent resin particles P2 according to the example, the variation in the index V/MPS for evaluating the water absorption rate was smaller than that in the water-absorbent resin particles P3 according to the comparative example. Specifically, the variance of the index V/MPS for evaluating the water absorption rate of 3 samples of the water-absorbent resin particles P2 was 0.0003, whereas the variance of the index V/MPS for evaluating the water absorption rate of 3 samples of the water-absorbent resin particles P3 was 0.004. It was thus confirmed that for the water-absorbent resin particles P2 according to the example, the variation was reduced as compared with that of the water-absorbent resin particles P3 according to the comparative example.

DESCRIPTION OF REFERENCE SIGNS

1: Polymerizer
2: Concentrator
3: Dryer
4: Sorter
5: Cooler
6: Classifier
40: Input port
41: Input port portion
42: Sorting member
42a: Net-like member
42b: Plate-like member
100: Production device
A1: Water-absorbent resin composition
A2: Water-absorbent resin precursor
A3: Water-absorbent resin precursor

## Claims

**1.** A water-absorbent resin particle production device comprising:

a dryer configured to dry a water-absorbent resin composition to provide a water-absorbent resin precursor;
a classifier configured to classify the water-absorbent resin precursor to provide water-absorbent resin particles; and
a sorter disposed on a pathway connecting the dryer and the classifier,
wherein the sorter is configured to select a portion of the water-absorbent resin precursor having a water content of 20% or more.

**2.** The water-absorbent resin particle production device according to claim 1, wherein the sorter is configured to select a portion of the water-absorbent resin precursor having a surface temperature of 50°C to 100°C and a size greater than a predetermined size as the portion of the water-absorbent resin precursor having a water content of 20% or more.

**3.** The water-absorbent resin particle production device according to claim 2, wherein the sorter includes an input port portion provided with an input port configured to receive the water-absorbent resin precursor discharged from the dryer, and a sorting member connected to the input port portion and provided with an opening of the predetermined size, and
the sorter is configured to feed a portion of the water-absorbent resin precursor introduced into the input port to a pathway connected to the classifier, the portion having passed through the opening.

**4.** The water-absorbent resin particle production device according to claim 3, wherein the sorting member includes a net-like member having a plurality of openings of the predetermined size.

**5.** The water-absorbent resin particle production device according to claim 3 or 4, wherein the sorting member is configured to impart movement to the water-absorbent resin precursor introduced into the input port.

**6.** The water-absorbent resin particle production device according to any one of claims 2 to 5, wherein the predetermined size is 7 mm to 15 mm.

**7.** The water-absorbent resin particle production device according to any one of claims 1 to 6, further comprising a cooler disposed on a pathway connecting the sorter and the classifier,
wherein the cooler is configured to cool the water-absorbent resin precursor sent from the sorter to the pathway connected to the classifier.

**8.** A method for producing water-absorbent resin particles, the method comprising:

drying a water-absorbent resin composition to provide a water-absorbent resin precursor;
selecting and removing a portion of the water-absorbent resin precursor, the portion having a water content of 20% or more, from the water-absorbent resin precursor; and
classifying the remaining portion of the water-absorbent resin precursor to provide classified water-absorbent resin particles.

Fig. 1

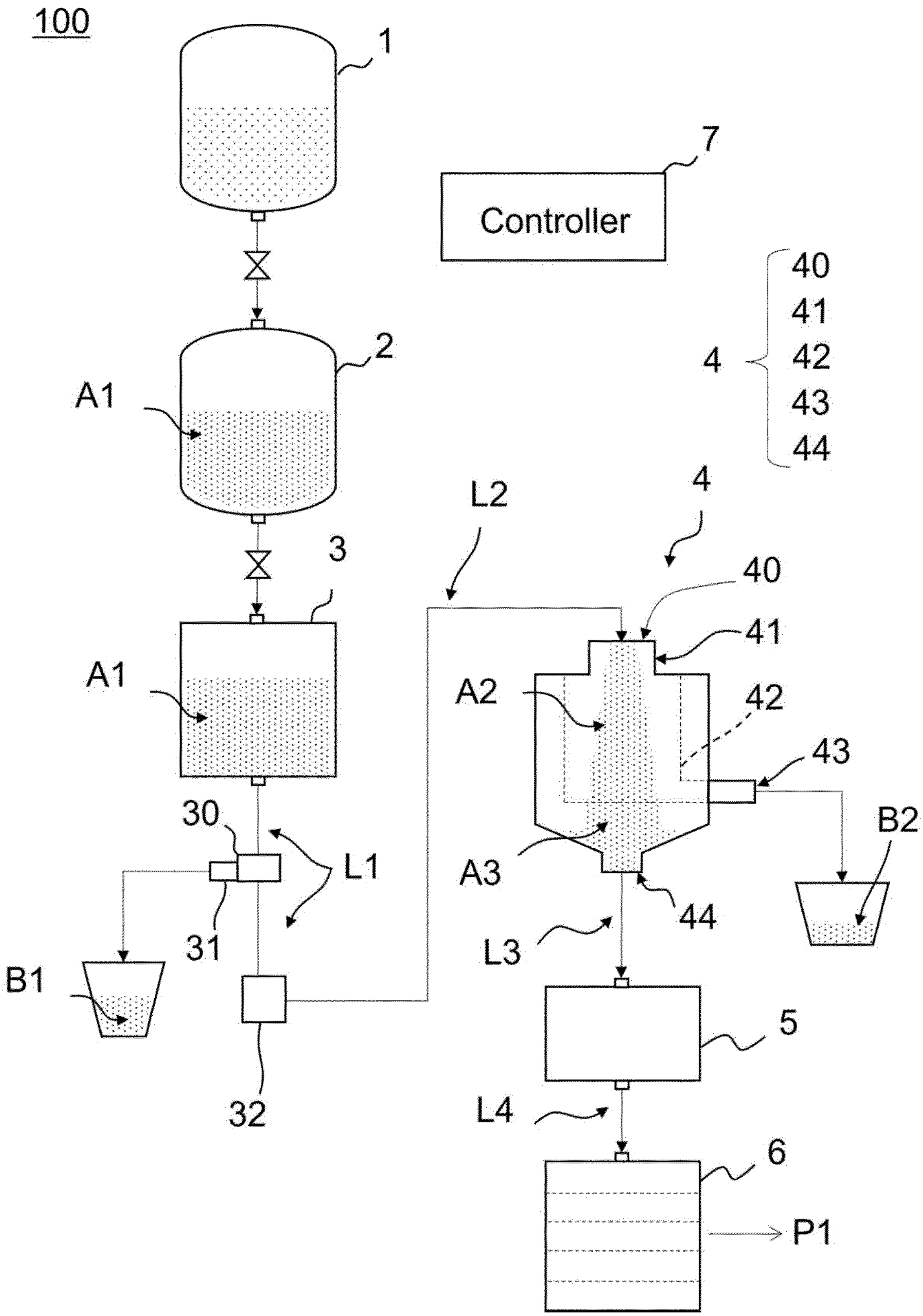
100
1
7
Controller
40
41
42
43
44
4
2
A1
L2
4
3
40
41
A1
A2
42
43
30
L1
B2
A3
31
44
L3
B1
5
32
L4
6
P1

Fig. 2A

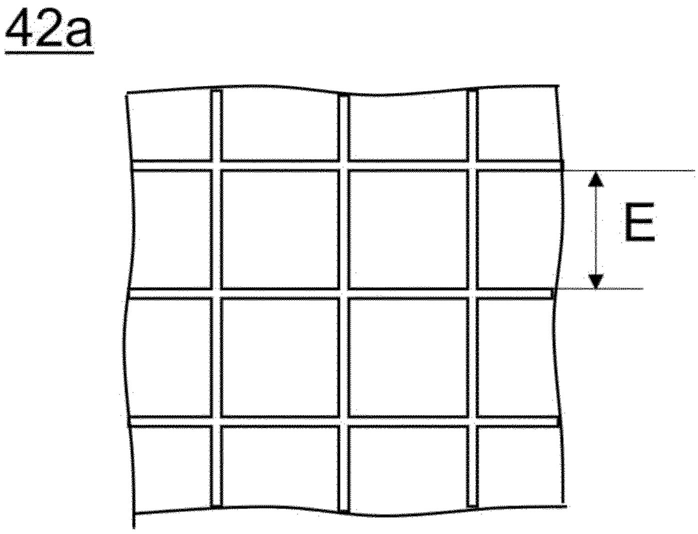


Fig. 2B

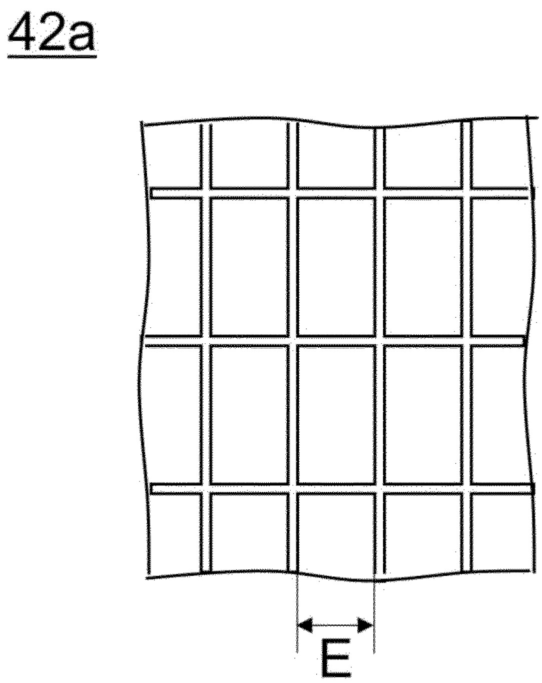

Fig. 2C

42a

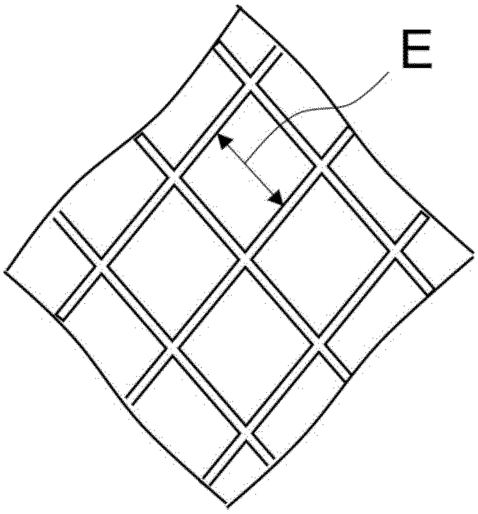


Fig. 2D

42a

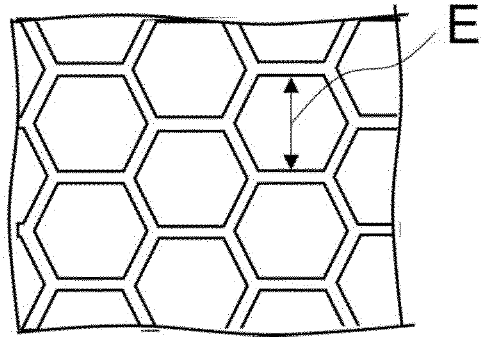

Fig. 3A

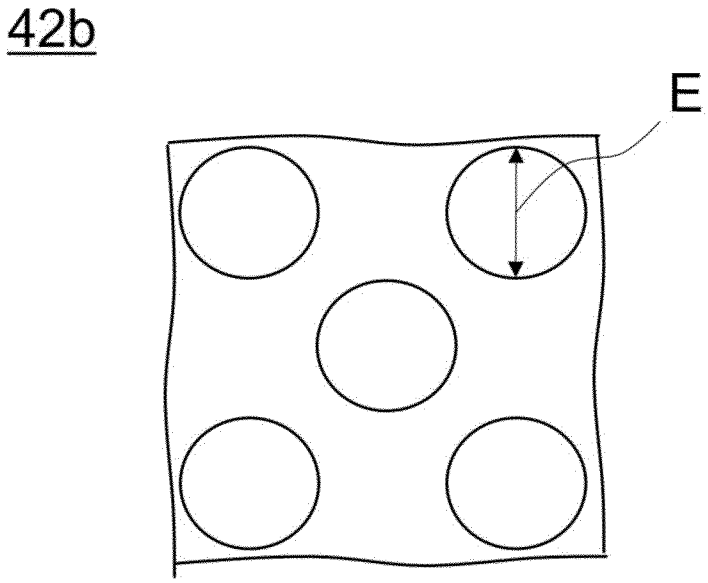


Fig. 3B

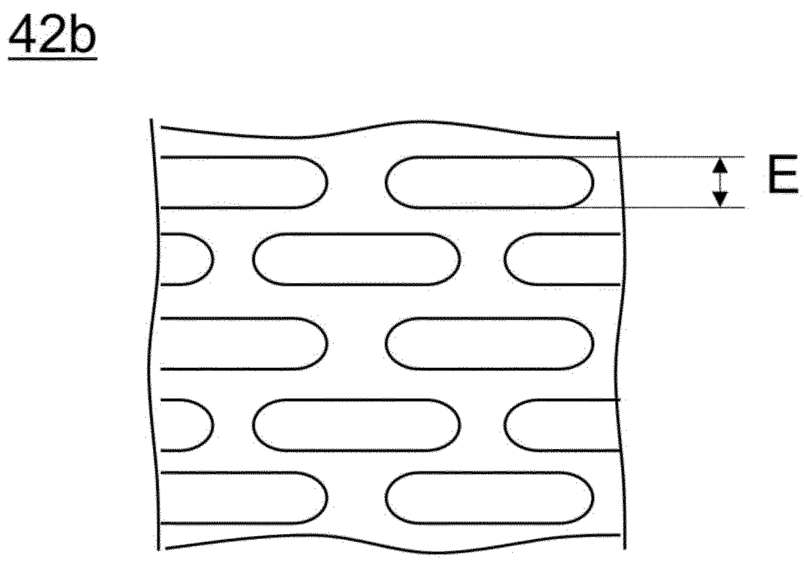

Fig. 4

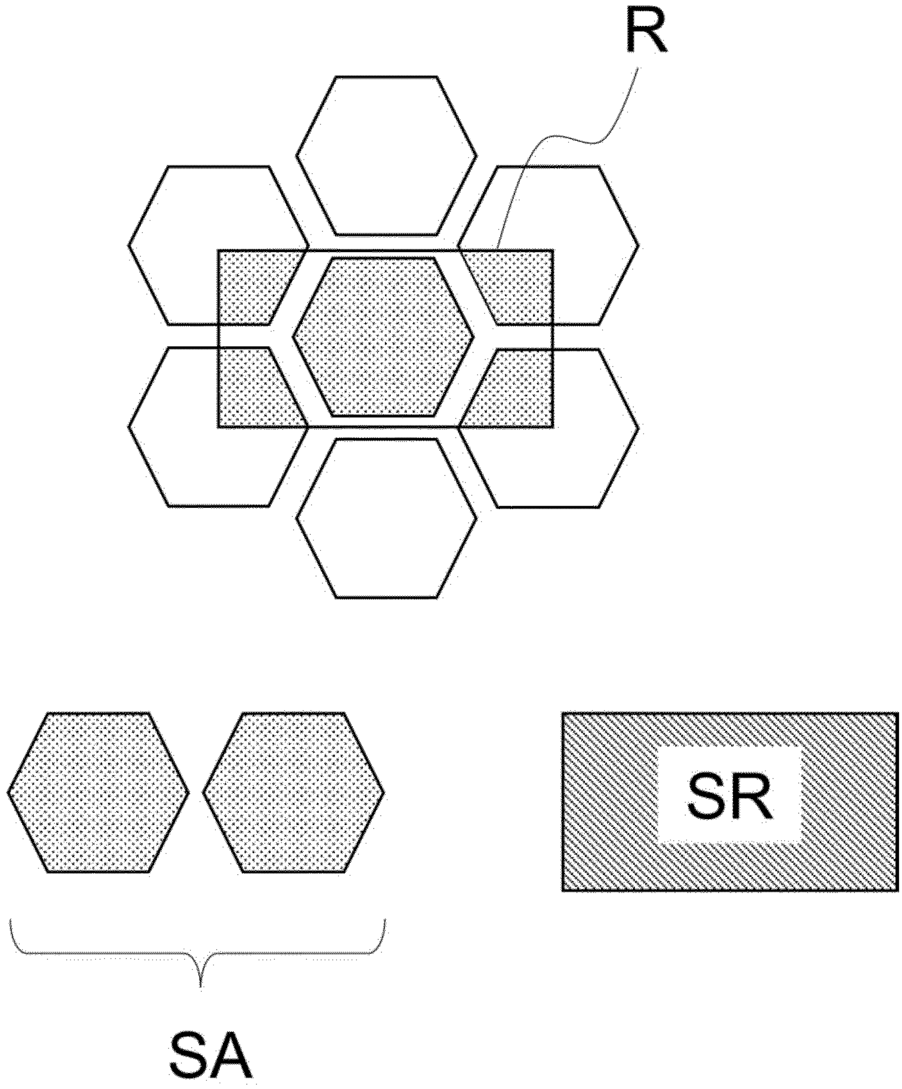

Fig. 5A

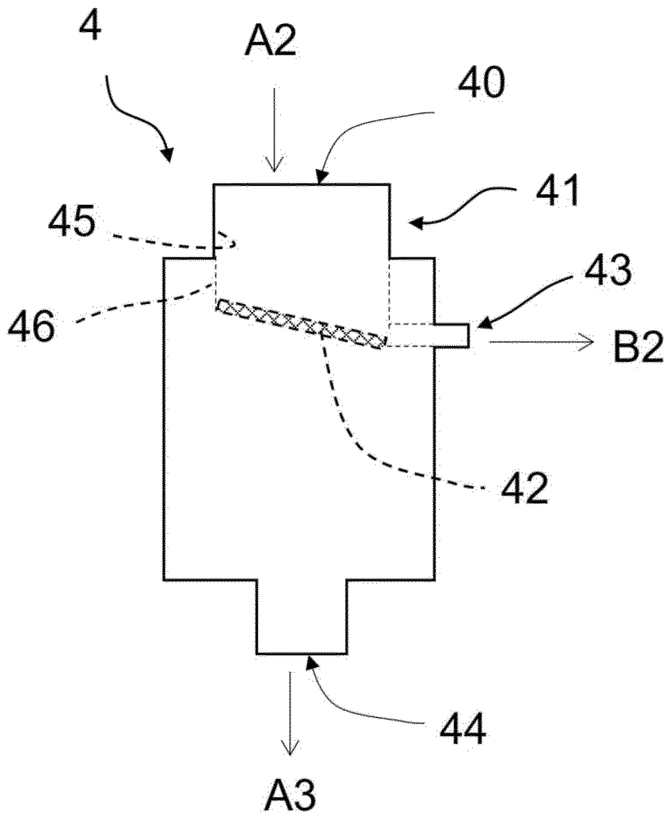


Fig. 5B

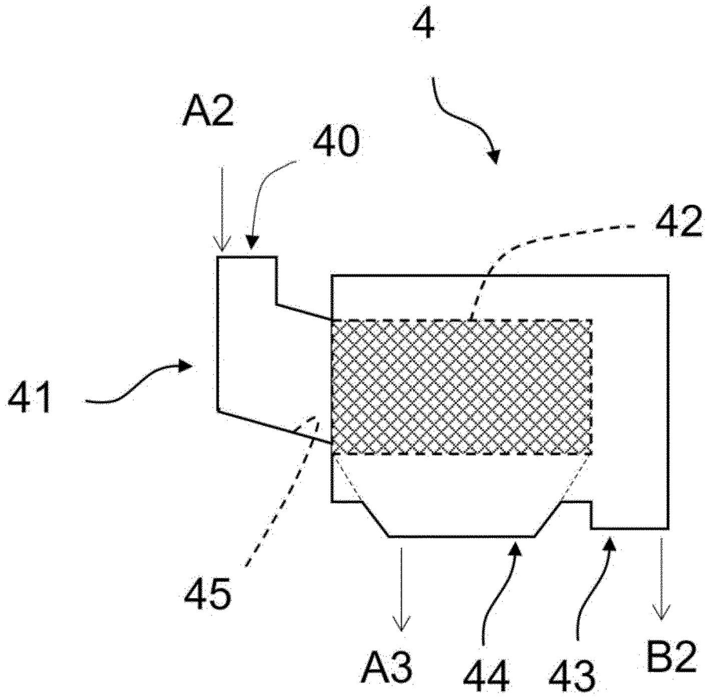

Fig. 5C

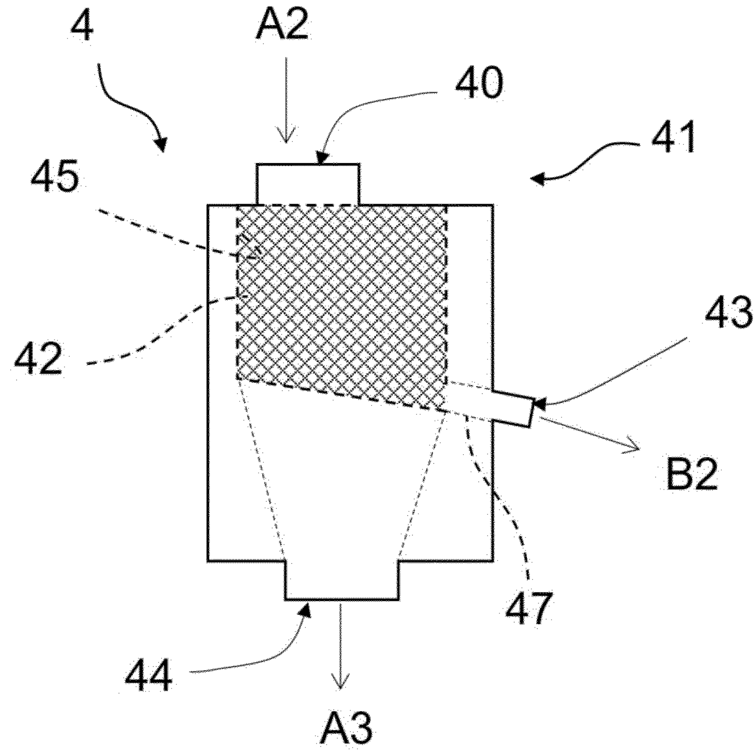


Fig. 5D

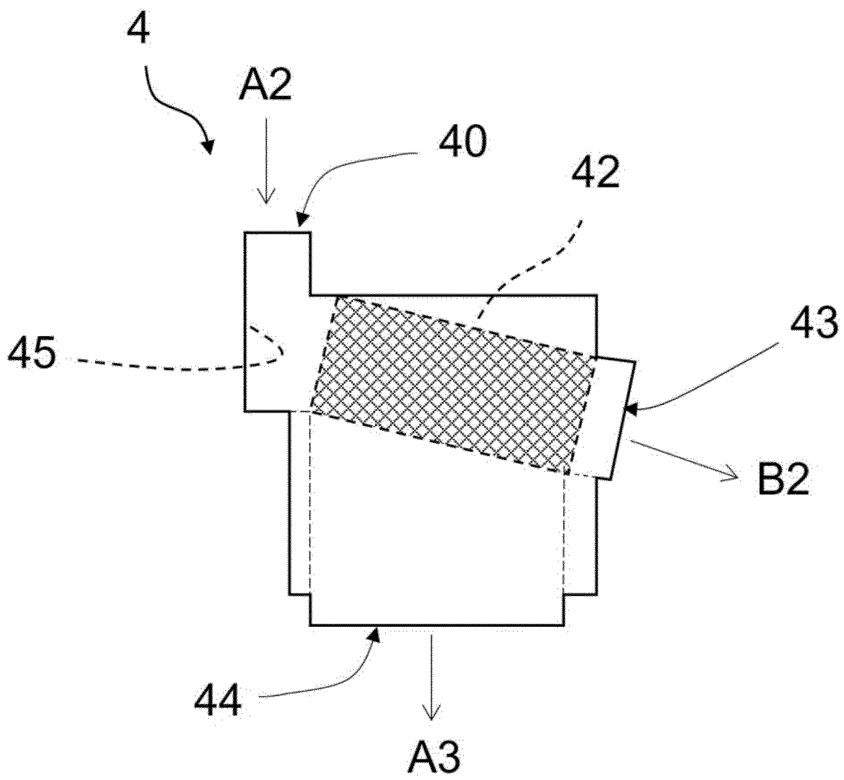

Fig. 6

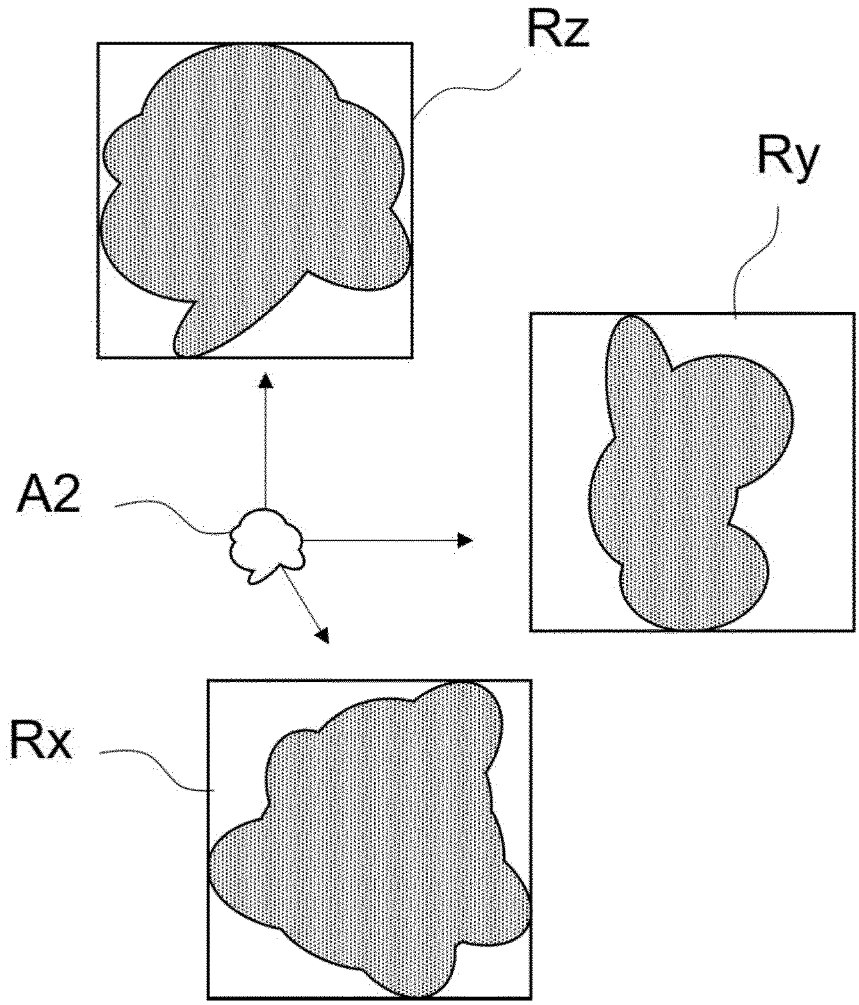

Fig. 7

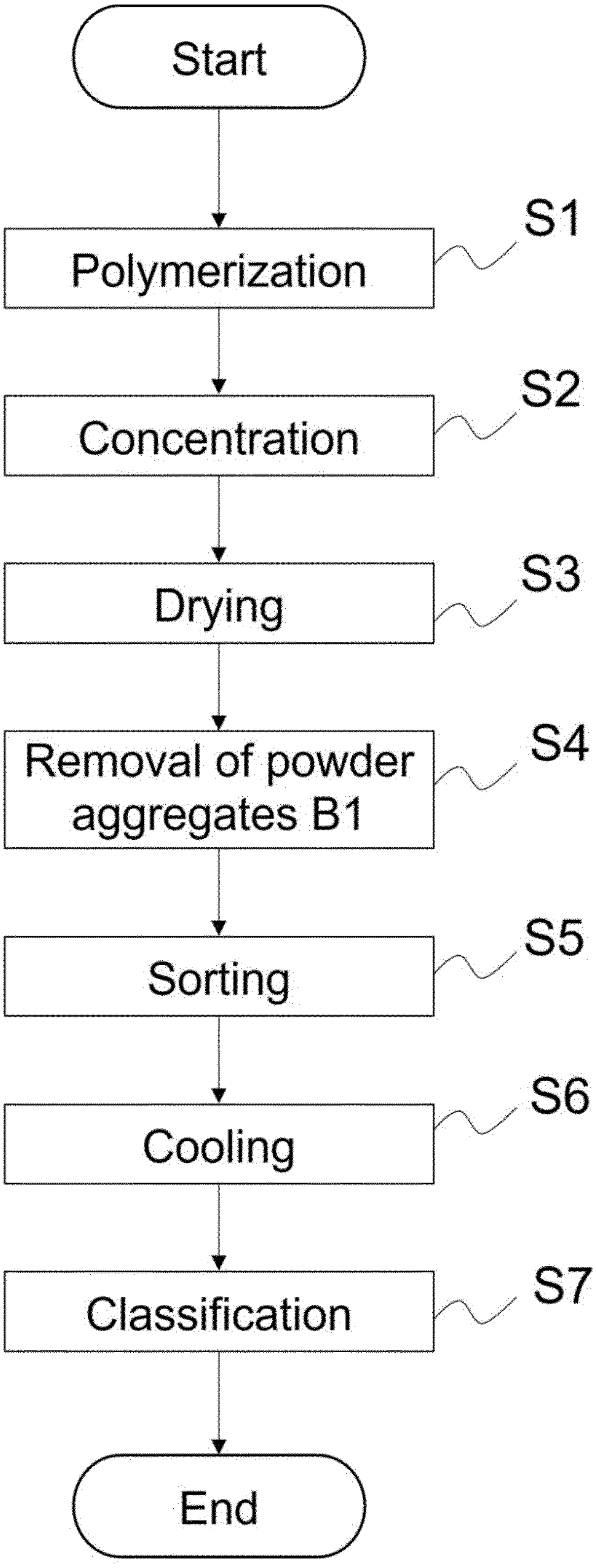
Start
Polymerization
S1
Concentration
S2
Drying
S3
Removal of powder aggregates B1
S4
Sorting
S5
Cooling
S6
Classification
S7
End

Fig. 8

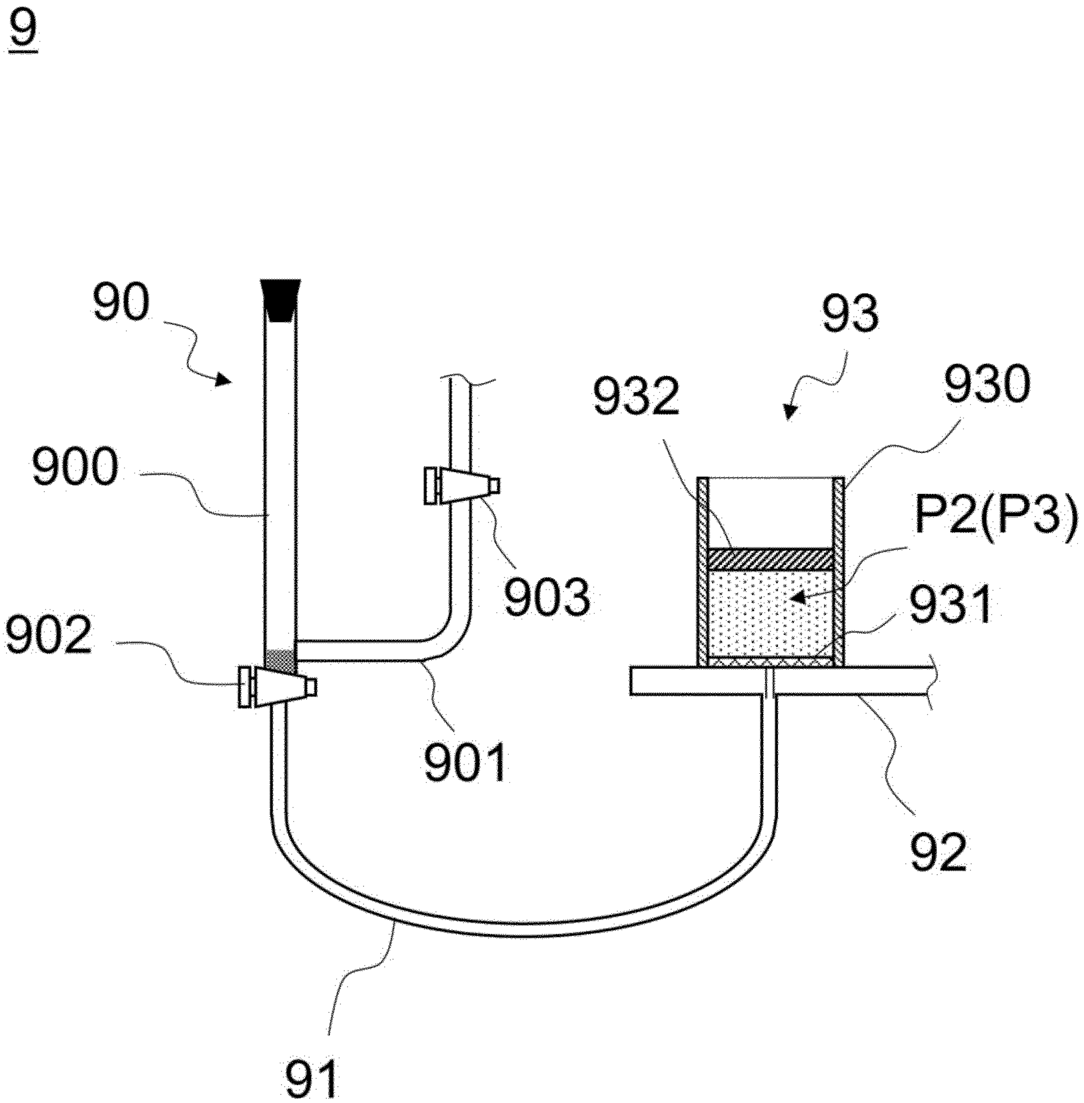

Fig. 9A

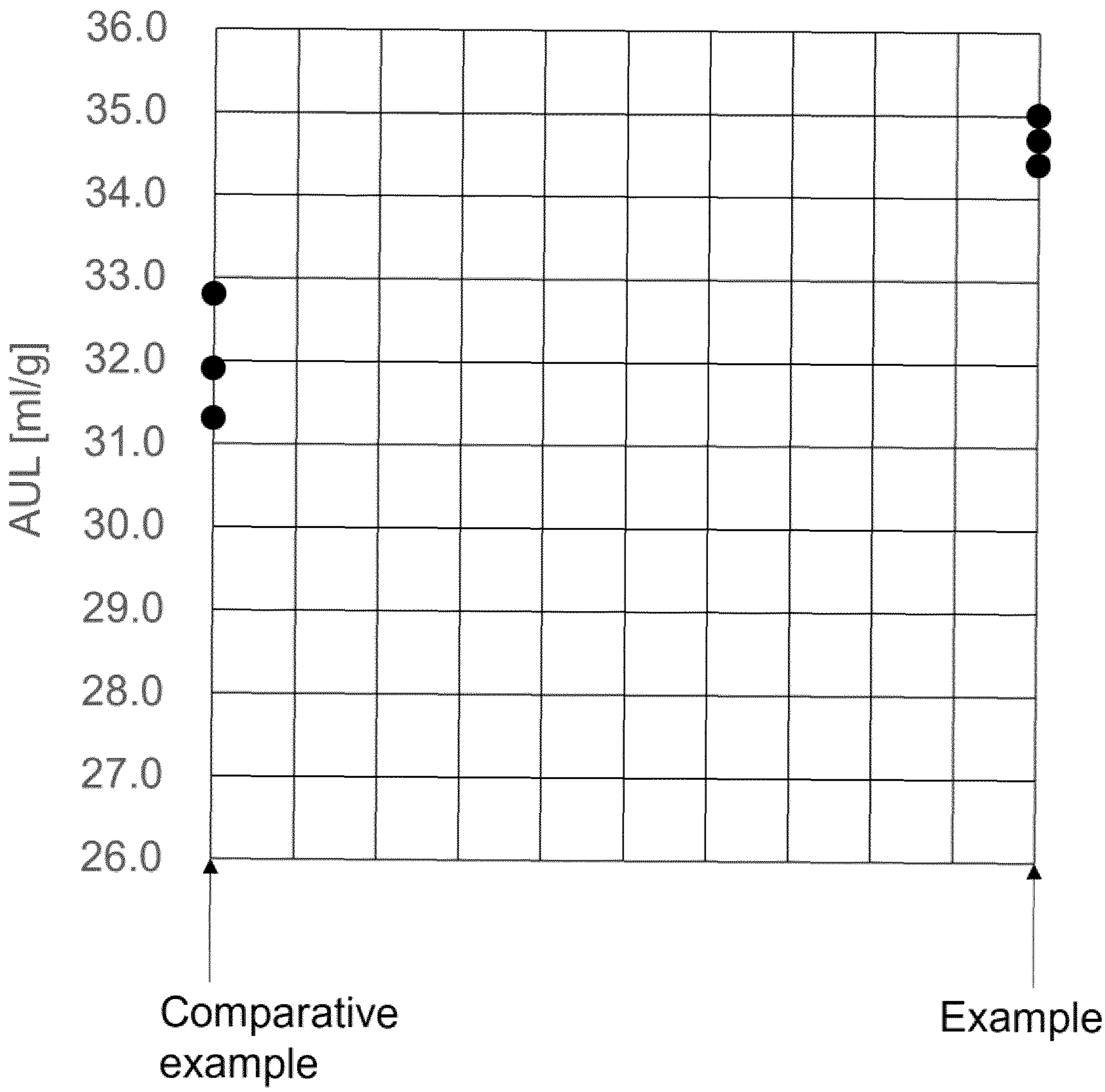
36.0
35.0
34.0
33.0
32.0
31.0
30.0
29.0
28.0
27.0
26.0
AUL [ml/g]
Comparative example
Example

Fig. 9B

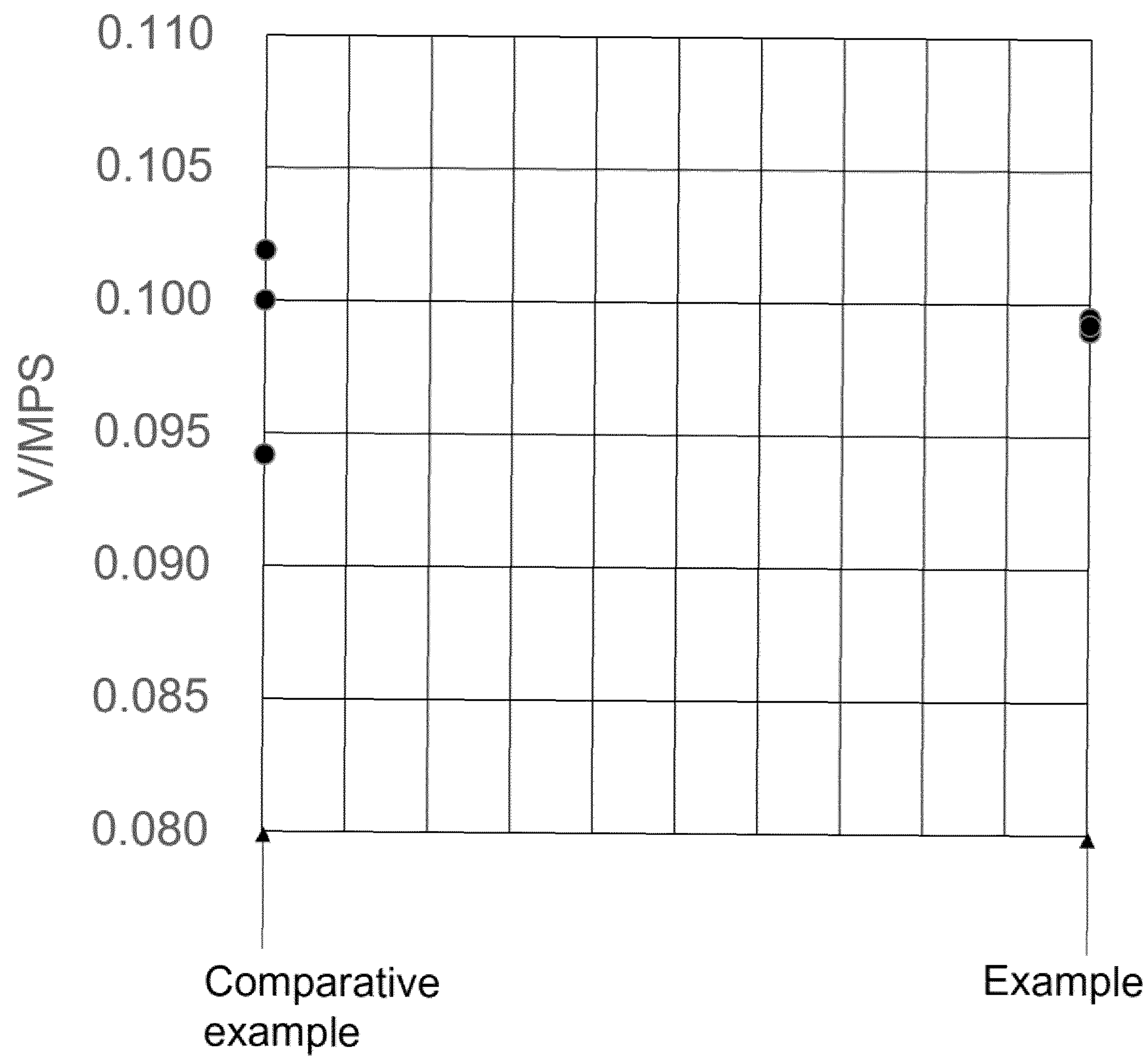
0.110
0.105
0.100
0.095
0.090
0.085
0.080
V/MPS
Comparative example
Example

## INTERNATIONAL SEARCH REPORT

International application No.
**PCT/JP2022/009365**

**A. CLASSIFICATION OF SUBJECT MATTER**

***C08J 3/12***(2006.01)i; ***B01J 20/26***(2006.01)i; ***B01J 20/30***(2006.01)i
FI: C08J3/12 Z; B01J20/26 D; B01J20/30

According to International Patent Classification (IPC) or to both national classification and IPC

**B. FIELDS SEARCHED**

Minimum documentation searched (classification system followed by classification symbols)

C08J3/12; B01J20/26; B01J20/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-292919 A (NIPPON SHOKUBAI CO LTD) 26 October 1999 (1999-10-26) entire text, in particular, claims, paragraphs [0032]-[0125], [0176]-[0183], fig. 1-6 | 1, 8 |
| A | JP 2007-077393 A (NIPPON SHOKUBAI CO LTD) 29 March 2007 (2007-03-29) entire text | 1-8 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2022** | **26 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/009365**

| Patent document cited in search report | Publication date (day/month/year) | Patent family member(s) | Publication date (day/month/year) |
|---|---|---|---|
| JP 11-292919 A | 26 October 1999 | US 6291636 B1<br>entire text, in particular, claims, column 6, line 14 to column 20, line 48, example 1, fig. 1-6<br>EP 948997 A2 | |
| JP 2007-077393 A | 29 March 2007 | US 2007/0041796 A1<br>entire text<br>EP 1754725 A2<br>EP 2287215 A2<br>CN 1916032 A<br>TW 200712101 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6738979 B